# EUROPÄISCHE PATENTSCHRIFT

(11) **EP 2 563 632 B1**
(45) Veröffentlichungstag und Bekanntmachung des Hinweises auf die Patenterteilung: **24.02.2021**
(21) Anmeldenummer: 11711464.5
(22) Anmeldetag: 24.03.2011
(51) Int. Cl.: B60T 17/00, B01D 53/26

(54) **DRUCKLUFTAUFBEREITUNGSEINRICHTUNG, DRUCKLUFTVERSORGUNGSSYSTEM MIT EINER DRUCKLUFTAUFBEREITUNGSEINRICHTUNG UND AUFBEREITUNGSMODUL HIERFÜR SOWIE VERFAHREN ZUM BETRIEB EINER DRUCKLUFTAUFBEREITUNGSEINRICHTUNG, STEUERMODUL UND FAHRZEUG MIT EINER DRUCKLUFTAUFBEREITUNGSEINRICHTUNG**
COMPRESSED AIR RECOVERY DEVICE, COMPRESSED AIR SUPPLY SYSTEM COMPRISING A COMPRESSED AIR RECOVERY DEVICE AND CORRESPONDING RECOVERY MODULE, AS WELL AS METHOD FOR OPERATING A COMPRESSED AIR RECOVERY DEVICE, CONTROL MODULE AND VEHICLE COMPRISING A COMPRESSED AIR RECOVERY DEVICE
DISPOSITIF DE RÉCUPÉRATION COMPRIMÉ AIR, SYSTÈME D'AIR COMPRIMÉ COMPRENANT UN DISPOSITIF DE RÉCUPÉRATION D'AIR COMPRIMÉ ET MODULE RÉCUPÉRATION CORRESPONDANT, AINSI QUE PROCEDE POUR FAIRE FONCTIONNER UN DISPOSITIF DE RÉCUPÉRATION D'AIR COMPRIMÉ, MODULE DE COMMANDE ET VEHICULE COMPRENANT UN DISPOSITIF DE RÉCUPÉRATION D'AIR COMPRIMÉ

(30) Priorität: 30.04.2010 DE 102010018949
(43) Veröffentlichungstag der Anmeldung: 06.03.2013
(73) Patentinhaber: WABCO GmbH, 30453 Hannover (DE)
(72) Erfinder: EGGEBRECHT, Detlev, 30519 Hannover (DE); FEYERABEND, Konrad, 30625 Hannover (DE)
(74) Vertreter: Lauerwald, Jörg
(86) Internationale Anmeldenummer: PCT/EP2011/001462
(87) Internationale Veröffentlichungsnummer: WO 2011/134575

(56) Entgegenhaltungen:
- EP-A2- 2 140 926
- EP-B1- 1 318 936
- DE-A1- 3 525 083
- DE-A1-102006 048 071
- DE-B3-102005 057 004
- DE-B4-102007 009 768
- US-A- 4 812 148
- US-A- 5 209 764

## Beschreibung

Die Erfindung betrifft eine Druckluftaufbereitungseinrichtung gemäß dem Oberbegriff der Ansprüche 1 und 3, ein Druckluftversorgungssystem für ein Fahrzeug gemäß dem Oberbegriff des Anspruchs 6 sowie eine Druckluftaufbereitungseinrichtung mit einem Aufbereitungsmodul gemäß Anspruch 11, ein Druckluftaufbereitungssystem mit einem Aufbereitungsmodul gemäß Anspruch 13, eine Druckluftaufbereitungseinrichtung mit einem Steuermodul gemäß Anspruch 15, ein Druckluftaufbereitungssystem mit einem Steuermodul gemäß Anspruch 16, sowie ein Fahrzeug gemäß Anspruch 17.

EP 1 318 936 B1 offenbart ein Fahrzeug-Druckluftbremssystem mit einer Druckluftaufbereitungseinrichtung, deren Druckleitung Druckluft von einem Kompressor zuführbar ist. An die Druckleitung ist eine Systemdruckleitung über ein Rückschlagventil angeschlossen. In der Druckleitung ist eine Trocknungseinrichtung angeordnet, welche die vom Kompressor zugeführte Druckluft von Dampf und Partikelfracht befreit.

In einem Förderbetrieb wird die vom Kompressor zugeführte Druckluft über die Trocknungseinrichtung in die Systemdruckleitung gefördert und dort für die Nutzung in Druckluftverbraucherkreisen zur Verfügung gestellt.

Aus der Druckleitung zweigt eine Entlüftungsleitung bzgl. der Strömungsrichtung im Förderbetrieb vor der Trocknungseinrichtung, also auf der gegenüber der Systemdruckleitung liegenden Seite der Trocknungseinrichtung, ab, wobei in der Entlüftungsleitung ein pneumatisch betätigbares Entlüftungsventil angeordnet ist. Zur Regenerierung der Trocknungseinrichtung sieht die bekannte Druckluftaufbereitungseinrichtung einen Regenerationspfad vor, welcher über ein Entlüftungssteuerventil in einem Regenerationsbetrieb mit der Systemdruckleitung verbindbar ist. Der Regenerationspfad mündet zwischen der Trocknungseinrichtung und dem Rückschlagventil in die Druckleitung ein. Im Regenerationsbetrieb verbindet das Entlüftungssteuerventil die Systemdruckleitung mit der Druckleitung und ermöglicht eine Durchströmung der Trocknungseinrichtung durch den Regenerationspfad entgegen der Strömungsrichtung im Förderbetrieb. Im Regenerationsbetrieb wird das Entlüftungsventil in die durchgängige Stellung geschaltet, so dass die Regenerationsluft von der Trocknungseinrichtung durch die Entlüftungsleitung abströmen kann.

Zur Drucksteuerung ist ein elektrisch betätigbares Zufuhrsteuerventil vorgesehen, welches zwischen der Systemdruckleitung und einer Kompressorsteuerleitung angeordnet ist. An die Kompressorsteuerleitung ist ein pneumatisches Schaltelement des Kompressors angeschlossen, so dass die Druckluftzufuhr vom Kompressor durch Schalten des Zufuhrsteuerventils unterbrochen werden kann.

Bei der bekannten Druckluftaufbereitungseinrichtung wird das Entlüftungsventil von dem Entlüftungssteuerventil betätigt, wodurch das Öffnen des Regenerationspfades zwingend an die Öffnung der Entlüftungsleitung gekoppelt ist. Insbesondere in kalter Umgebung, bspw. im Winterbetrieb eines Fahrzeuges, ist eine Abblasebetriebsart (cold mode) vorteilhaft, wobei die Entlüftungsleitung bei laufendem Kompressor geöffnet wird. Dadurch kann mit warmer Luft des Kompressors einer Vereisung entgegengewirkt werden und ggf. auf Heizeinrichtungen an dem Entlüftungsventil verzichtet werden. Bei der bekannten Einrichtung, bei der die Öffnung des Entlüftungsventils an die Freigabe des Regenerationspfades geknüpft ist, ist ein Abblasebetrieb nicht ohne Rückströmung durch den Regenerationspfad möglich. Es geht daher im Abblasebetrieb Druckluft aus dem Volumen der Druckleitung und dem Regenerationspfad verloren, welche nach Abfluss des Abblasebetriebs von dem Kompressor nachgefördert werden muss. Der Energiebedarf des Kompressors für die Nachförderung führt zu einem entsprechend erhöhten Treibstoffverbrauch des Fahrzeugs.

DE 10 2007 009 768 B4 sieht eine Druckluftversorgungseinrichtung für ein Nutzfahrzeug vor, bei der die Kompressorsteuerleitung für den Kompressor an den Regenerationspfad geknüpft ist und die Öffnung des Entlüftungsventils durch ein elektrisches Magnetventil unabhängig von der Öffnung des Regenerationspfades erfolgt. Dadurch ist zwar ein Abblasebetrieb bei laufendem Kompressor ohne gleichzeitige Öffnung des Regenerationspfades möglich. Jedoch ist durch die fluidische Verbindung des Regenerationspfades mit der Kompressorsteuerleitung ein Verbraucher an die Kompressorsteuerleitung angeschlossen. Damit steht in vielen Betriebszuständen für die pneumatische Schaltung des Kompressors nur ein reduzierter Schaltdruck zur Verfügung. Eine schnelle Schaltung des Kompressors, der in vielen Betriebsarten gewünscht oder gar erforderlich ist, kann durch den Druckverlust über den Regenerationspfad mit der bekannten Einrichtung nicht gewährleistet werden. Außerdem kann es bei der bekannten Einrichtung bei abgeschaltetem Kompressor zu Druckverlust in der Systemdruckleitung kommen, wenn die Druckleitung zwischen Kompressor und der Trocknungseinrichtung nicht völlig dicht ist, und über den Regenerationspfad Luft aus dem System nachströmt. Dies ist insbesondere bei gealterten Kompressoren der Fall, wenn sich Ölkohle auf die Rückschlagventile im Kompressor gesetzt hat, die die Druckleitung abdichten, so dass die Druckleitung bei ausgeschaltetem Kompressor Druck verliert.

In vielen Anwendungsfällen, insbesondere bei hohem Druckluftbedarf wie bei Gelenkbussen und ähnlichen Fahrzeugen kann zudem mit den oben beschriebenen Druckluftaufbereitungseinrichtungen gemäß dem Stand der Technik nicht schnell genug Druckluft nachgefördert werden, da der Kompressor während der Regeneration der Trocknungseinrichtung keine Druckluft zuführt. Es wurden daher Druckluftaufbereitungseinrichtungen mit zwei Trocknungseinrichtungen vorgeschlagen, wobei die eine Trocknungseinrichtung die weitere Druckluftzufuhr ermöglichen soll, während die andere Trocknungseinrichtung regeneriert.

US 4, 812, 148 offenbart eine Druckluftaufbereitungseinrichtung mit zwei Trocknungseinrichtungen, deren Ausgänge jeweils unter Zwischenschaltung eines Rückschlagventils mit einem Druckluftbehälter verbunden sind. Die Ausgänge der Trocknungseinrichtungen stehen zudem über eine Drosselleitung in ständiger Verbindung. Die Eingänge der Trocknungseinrichtungen sind jeweils mit einem elektromagnetischen Schaltventil verbunden, welche von einem Kompressor versorgt werden. Die elektromagnetischen Steuerventile sind zwischen zwei Schaltstellungen von einem Steuerkreis umschaltbar, so dass die jeweils zugeordnete Trocknungseinrichtung entweder mit dem Kompressor verbunden oder entlüftet ist. Die Steuerventile befinden sich in unterschiedlichen Schaltstellungen, wobei immer ein Teilstrom des die aktive Trocknungseinrichtung verlassenden Druckluftstroms über die Drosselleitung und die entlüftete Trocknungseinrichtung abgeführt wird und dadurch die entlüftete Trocknungseinrichtung regeneriert. Die Schaltstellungen der beiden elektromagnetischen Steuerventile werden in vorgegebenen Zeitabständen gewechselt, so dass die jeweils andere Trocknungseinrichtung aktiviert bzw. regeneriert wird.

US 5, 209, 764 zeigt eine Druckluftaufbereitungseinrichtung mit zwei Trocknungseinrichtungen, von denen jeweils eine aktiviert ist und die jeweils andere regeneriert. Hierzu sind den Trocknungseinrichtungen jeweils elektrische Steuerventile zugeordnet, welche von einem Relais geschaltet werden. Das Relais wird von einer Zeitschalteinrichtung (Timer) kontrolliert. Nach vorgegebenen Zeitintervallen werden die Schaltstellungen beider Steuerventile gewechselt. Beide Trocknungseinrichtungen werden somit alternativ aktiviert und regeneriert, bis ein maximaler Systemdruck im Druckluftbehälter erreicht ist und die Druckluftzufuhr durch den Kompressor abgeschaltet wird.

Mit den bekannten Druckluftaufbereitungseinrichtungen mit zwei alternativ betriebenen Trocknungseinrichtungen kann zwar die Druckluftzufuhr aufrecht gehalten werden, wenn eine Trocknungseinrichtung regeneriert. Allerdings ist dafür ein hoher baulicher Aufwand mit mehreren Steuerventilen und Schalteinrichtungen für die Einhaltung vorgesehener Zeitintervalle (Relais und dergl.) erforderlich. Zudem erhöhen die erforderlichen Bauteile, insbesondere die teuren elektromagnetischen Steuerventile für jede Trocknungseinrichtung, die Herstellungskosten der Druckluftaufbereitungseinrichtung. Insbesondere aber wird bei den bekannten Druckluftaufbereitungseinrichtungen eine Regeneration turnusmäßig durchgeführt, auch wenn eine Regeneration gar nicht erforderlich ist. Dadurch wird ein beträchtlicher Teil der vom Kompressor geförderten Druckluft nutzlos entlüftet und somit die Effizienz der Druckluftaufbereitungseinrichtung herabgesetzt.

Druckluftaufbereitungseinrichtungen und Druckluftversorgungssysteme mit Druckluftaufbereitungseinrichtungen sind als Bestandteile von Fahrzeugen möglichst kostengünstig herzustellen und müssen dabei möglichst effektiv arbeiten.

Der Erfindung liegt nach alledem das Problem zugrunde, eine Druckluftaufbereitungseinrichtung, ein Druckluftversorgungssystem und ein Aufbereitungsmodul sowie ein Steuermodul und ein Fahrzeug zu schaffen, welche mit geringen Herstellungs- und Betriebskosten eine vielseitige und effektive Druckluftaufbereitung für ein Fahrzeug ermöglichen.

Das Problem wird erfindungsgemäß mit einer Druckluftaufbereitungseinrichtung mit den Merkmalen der Ansprüche 1 oder 3 oder durch ein Druckluftversorgungssystem mit den Merkmalen des Anspruchs 6 bzw. durch eine Druckluftaufbereitungseinrichtung mit einem Aufbereitungsmodul mit den Merkmalen des Anspruchs 11 gelöst. Ferner wird das Problem durch ein Druckluftaufbereitungssystem mit einem Aufbereitungsmodul gemäß Anspruch 13, eine Druckluftaufbereitungseinrichtung mit einem Steuermodul gemäß Anspruch 15, ein Druckluftaufbereitungssystem mit einem Steuermodul gemäß Anspruch Anspruch 16, sowie ein Fahrzeug gemäß Anspruch 17 erfindungsgemäß gelöst.

Erfindungsgemäß wird die Leistungsfähigkeit der Druckluftaufbereitungseinrichtung durch ein Aufbereitungsmodul mit einer Trocknungseinrichtung mit einer parallel zur Druckleitung liegenden Paralleldruckleitung erheblich gesteigert. Die Paralleldruckleitung durch das Aufbereitungsmodul ist dabei alternativ zur Druckleitung der Druckluftaufbereitungseinrichtung von einem Wechselventil freigebbar. Durch Einschaltung des Aufbereitungsmoduls kann die Druckluftförderung auch dann fortgesetzt werden, wenn die Trocknungseinrichtung der Druckluftaufbereitungseinrichtung regeneriert wird. Es können daher auch in Anwendungsfällen mit erhöhtem Druckluftbedarf, wie bspw. bei Gelenkbussen, die Druckluftverluste in den Druckluftverbraucherkreisen rasch wieder aufgefüllt werden. Mit dem erfindungsgemäßen Aufbereitungsmodul kann eine Auslastung des Kompressors bis zu 97% oder mehr erreicht werden, also bei erhöhtem Druckluftbedarf in den Druckluftverbraucherkreisen ein praktisch kontinuierlicher Förderbetrieb in die Systemdruckleitung aufrechterhalten werden.

Dabei können die Herstellungskosten der Druckluftaufbereitungseinrichtung gering gehalten werden, in dem das mittels Wechselventil einschaltbare Aufbereitungsmodul im Vergleich zu einem Hauptmodul baulich einfach und mit kostengünstigen Bauteilen, insbesondere ohne elektrisch betätigte oder ausgelesene Bauteile, ausgestattet ist. Die Freigabe eines Regenerationspfades in dem Aufbereitungsmodul erfolgt vorteilhaft durch ein pneumatisch gesteuertes Governor-Ventil, welches ständig vom Systemdruck beaufschlagt ist. Die Druckluftaufbereitung erfolgt hauptsächlich durch das sehr fein kontrollierbare und daher hoch effiziente Hauptmodul und das Aufbereitungsmodul wird nur bei Bedarf einer Regeneration der Trocknungseinrichtung im Hauptmodul gezielt aktiviert. Das Hauptmodul ist dabei bevorzugt eine elektronisch gesteuerte Druckluftaufbereitungseinrichtung, die auch bei Fahrzeugen mit geringerem Luftbedarf eingesetzt werden kann. Sie unterscheidet sich dann nur in ihren Regelalgorithmen von Druckluftaufbereitungseinrichtung für Anwendungsfälle mit hohem Luftbedarf.

Das Aufbereitungsmodul ist gemäß einem weiteren Aspekt der Erfindung eine Baugruppe mit ausschließlich pneumatischen Elementen, welche kostengünstig vorgefertigt werden kann und in modularen Druckluftsystemen eingesetzt oder bei bestehenden Druckluftaufbereitungssystemen nachgerüstet werden kann. Das Aufbereitungsmodul umfasst einen Drucklufteingang, an den ein Kompressor anschließbar ist. Über den Drucklufteingang besteht eine Verbindung zu einer Druckleitung im Aufbereitungsmodul, in der eine Trocknungseinrichtung angeordnet ist. Das Aufbereitungsmodul weist eine vor der Trocknungseinrichtung abzweigende Entlüftungsleitung mit einem Entlüftungsventil und einen hinter der Trocknungseinrichtung einmündenden Regenerationspfad auf, welcher von einem druckabhängig gesteuerten Governor-Ventil freigebbar ist. Ein Steuereingang des Entlüftungsventils in der Entlüftungsleitung ist dabei vorteilhaft mit einer Regenerationsdruckleitung zwischen Governor-Ventil und Druckleitung verbunden. Die Betätigung des Entlüftungsventils wird daher durch das Governor-Ventil gesteuert wird und kann ohne weitere Bauteile erfolgen. Das druckabhängig gesteuerte Governor-Ventil wird ständig mit dem Systemdruck beaufschlagt und gibt den Regenerationspfad frei, sobald ein bestimmter Umschaltdruck erreicht ist. Der Umschaltdruck des Governor-Ventils ist dabei durch eine Ventilfeder einstellbar.

Das Aufbereitungsmodul kann bei einer Anwendung in einer Paralleldruckleitung einer Druckluftaufbereitungseinrichtung als pneumatisches Bauteil ohne elektrische Versorgung an die Druckluftaufbereitungseinrichtung angehängt werden, so dass einerseits eine kostengünstige modulare Bauweise möglich ist. Andererseits können bereits bestehende Druckluftaufbereitungseinrichtungen für Einsatzfälle mit erhöhtem Druckluftbedarf mit einem Aufbereitungsmodul nachgerüstet werden. Die Anordnung eines Aufbereitungsmoduls fördert zudem eine modulare Bauweise eines Druckluftversorgungssystems, bei der neben der Druckluftaufbereitung auch das Mehrkreisschutzventil und Bauteile der Steuereinrichtungen eines als Module angeordnet sind und je nach vorgesehener Verwendung des Druckluftversorgungssystems in einem Fahrzeug kombiniert werden können.

Das Aufbereitungsmodul mit Governor-Steuerung durch ein druckabhängig gesteuertes Steuerventil stellt eine einfache und kostengünstige Ausführungsmöglichkeit des Aufbereitungsmoduls zur Verfügung, welche während der Regeneration in der Druckluftaufbereitungseinrichtung alternativ zur Aufrechterhaltung des Förderbetriebs einschaltbar ist.

Das Wechselventil ist vorteilhaft pneumatisch betätigbar und zur Umschaltung zwischen der Druckluftaufbereitungseinrichtung und dem Aufbereitungsmodul an die Betätigung des Entlüftungsventils in der Druckluftaufbereitungseinrichtung geknüpft. Auf diese Weise kann ohne weitere Bauteile und daher kostengünstig eine Umschaltung der Druckluft vom Kompressor auf das Aufbereitungsmodul erfolgen, wenn zur Regeneration der Trocknungseinrichtung im Druckluftaufbereitungsmodul das Entlüftungsventil geöffnet wird.

In einer vorteilhaften Ausführungsform sind zwei baugleiche Aufbereitungsmodule vorgesehen, welche alternativ von dem Wechselventil aktivierbar sind. Dabei kann ein elektrisch betätigbares Zufuhrsteuerelement der Aufbereitungseinrichtung außerhalb der Aufbereitungsmodule angeordnet sein. Die parallel angeordneten Aufbereitungsmodule weisen ausschließlich pneumatische Elemente auf und sind daher kostengünstig.

Gemäß einem weiteren Aspekt der Erfindung ist das Entlüftungssteuerventil ein pneumatisch betätigbares Governor-Ventil, welches im Regenerationspfad angeordnet ist und ständig vom Druck in der Systemdruckleitung oder einer an die Systemdruckleitung angeschlossenen Leitung, insbesondere einem nicht druckbegrenzten Druckluftverbraucherkreis steuerbar ist. Auf ein elektrisch betätigbares Magnetventil als Entlüftungssteuerventil zur Steuerung der Regeneration kann dabei verzichtet werden. Ein pneumatisch betätigbares Ventil ist erheblich günstiger, so dass die Herstellungskosten der Druckluftaufbereitungseinrichtung reduziert sind. Zudem stellt das pneumatische Entlüftungssteuerventil auch bei Ausfall der elektronischen Steuerung oder des elektrischen Zufuhrsteuerelements, beispielsweise durch eine durchgebrannte Sicherung, eine regelmäßige Regeneration der Trocknungseinrichtung sicher, so dass eine nahezu unbegrenzte Weiterfahrt des Fahrzeugs möglich ist.

Beim Betrieb der Druckluftaufbereitungseinrichtung gibt das pneumatisch betätigbare Entlüftungssteuerventil bei Vorliegen des Umschaltdrucks in der Systemdruckleitung den Regenerationspfad frei und sperrt den Regenerationspfad bei Abfallen des Systemdrucks auf einen Rückschaltdruck wieder ab. Unter dem Umschaltdruck ist der minimale Druck zu verstehen, der am Steuereingang des Entlüftungssteuerventils anliegen muss, um das Entlüftungssteuerventil gegen eine Federkraft in die zweite Schaltstellung zu bringen, in welcher die Systemdruckleitung mit dem Regenerationspfad verbunden ist.

Als Rückschaltdruck wird im Weiteren das Druckniveau (kleiner als der Umschaltdruck) bezeichnet, bei dessen Erreichen das Entlüftungssteuerventil bei Druckabfall aus der zweiten Schaltstellung zurückschaltet in die erste Schaltstellung. Die Druckdifferenz zwischen diesen beiden Drücken ist durch Hysterese bedingt.

Ist die Steuerung des Entlüftungsventils an das Entlüftungssteuerventil geknüpft, so ist für ein selbsttätiges Öffnen der Entlüftungsleitung ohne elektrische Stellbefehle gesorgt. Das Öffnen der Entlüftungsleitung wird gleichwohl mit dem nachstehend beschriebenen Betriebsverfahren über das Zufuhrsteuerventil kontrolliert.

Beim Betrieb der Druckluftaufbereitungseinrichtung erfolgt eine Steuerung des gewünschten Betriebsmodus der Druckluftaufbereitungseinrichtung, nämlich insbesondere eines Förderbetriebs, eines Leerlaufbetriebs und eines Regenerationsbetriebs, ausschließlich durch das elektrisch betätigbare Zufuhrsteuerventil als Stellglied, indem das Zufuhrsteuerventil nach Maßgabe einer Steuereinrichtung die Druckluftzufuhr ein- oder ausschaltet. Gemäß einem weiteren Aspekt der Erfindung ist zur Durchführung des nachfolgend beschriebenen Verfahrens zum Betrieb der Druckluftaufbereitungseinrichtung ein Steuermodul vorgesehen, welches eine Steuereinheit zur Ansteuerung des elektrisch betätigbaren Zufuhrsteuerventils umfasst. Der Steuereinheit sind ein Signalausgang und/oder eine interne Signalleitung zum Anschluss des elektrisch betätigbaren Zufuhrsteuerventils der Druckluftaufbereitungseinrichtung zugeordnet. Über den Signalausgang bzw. die Signalleitung ist ein elektrisches Steuersignal der Steuereinheit für das Zufuhrsteuerventil abgebbar. Ist das Zufuhrsteuerventil in einer vorteilhaften Ausführungsform innerhalb des Steuermoduls angeordnet, gibt die Steuereinheit das elektrische Betätigungssignal für das Zufuhrsteuerventil über eine interne Signalleitung zum Zufuhrsteuerventil, also eine innerhalb des Steuermoduls angeordnete Signalleitung, ab.

Auf diese Weise kann die Druckluftzufuhr zur Druckluftaufbereitungseinrichtung über das Steuersignal von dem Steuermodul kontrolliert werden. Die Steuereinheit in dem Steuermodul ist derart ausgebildet, dass unter Berücksichtigung eines Systemdrucks der Druckluftaufbereitungseinrichtung ein gewünschter Betriebsmodus der Druckluftaufbereitungseinrichtung steuerbar ist. Zur Erfassung des Systemdrucks sind an die Steuereinheit vorteilhaft ein oder mehrere Drucksensoren angeschlossen, welche in einer Systemdruckleitung der Druckluftaufbereitungseinrichtung oder in einer an die Systemdruckleitung angeschlossenen Leitung, insbesondere einem Druckluftverbraucherkreis, angeordnet sind.

Das Steuermodul bildet somit eine separate Baugruppe in einem Druckluftversorgungssystem, welche über das Zufuhrsteuerventil die Betriebsmodi der Druckluftaufbereitungseinrichtung steuert. Dabei kann, wie unten näher beschrieben ist, das Druckluftversorgungssystem mit weiteren modularen Baugruppen ausgebildet sein, insbesondere einem Aufbereitungsmodul und einer modularen Baugruppe eines Mehrkreisschutzventils. Es ist dadurch möglich, dass das Steuermodul über das Zufuhrsteuerventil ausschließlich pneumatisch arbeitende Baugruppen steuert.

In einem Förderbetrieb ist das Zufuhrsteuerventil nicht bestromt und schaltet daher eine Druckluftzufuhr durch den Kompressor ein, so dass Druckluft durch die Aufbereitungseinrichtung zur Systemdruckleitung und damit schließlich zu den Druckluftverbraucherkreisen gefördert wird. Während des Förderbetriebs als gewünschtem Betriebsmodus ist vorgesehen, die Druckluftzufuhr bei Erreichen eines vorgegebenen Abschaltwerts des Systemdrucks zu unterbrechen, welcher niedriger als der Umschaltdruck des Governor-Ventils ist. Dadurch wird in einen Leerlaufbetrieb (idle-mode) gewechselt, bei dem die Druckluftzufuhr vom Kompressor unterbrochen ist, der Druck in der Druckleitung und in der Trocknungseinrichtung aber aufrechterhalten wird. Auf diese Weise wird der Förderbetrieb innerhalb eines Druckbandes gesteuert, welches nach oben durch den Umschaltdruck bzw. den unterhalb des Umschaltdrucks liegenden Abschaltwert für den Förderbetrieb begrenzt ist.

In einer vorteilhaften Weiterbildung sind der Förderbetrieb und der Leerlaufbetrieb Unterbetriebsarten eines Normalbetriebs, welcher von der Steuereinrichtung bzw. dem Steuermodul über das Zufuhrsteuerventil gesteuert werden. Ein Wechsel zwischen Förderbetrieb und Leerlaufbetrieb durch Ein- und Abschaltung der Druckluftzufuhr wird dabei im Rahmen des Normalbetriebs bevorzugt von der Fahrsituation eines mit der Druckluftaufbereitungseinrichtung ausgestatteten Fahrzeugs abhängig gemacht. Dabei ist ein Förderbetrieb insbesondere dann vorgesehen, wenn sich das Fahrzeug in einer Schubphase ohne Lastbetrieb befindet, bspw. auf eine rot geschaltete Ampel zufährt oder hangabwärts fährt. In solchen Schubbetriebphasen kann der Betrieb des Kompressors durch Rückgewinnung kinetischer Energie des Fahrzeugs (Rekuperation) ohne Einsatz von Kraftstoff unterstützt werden. In Betriebsphasen des Fahrzeugs mit hoher Last wird möglichst in den Leerlaufbetrieb gewechselt und der Kompressor abgeschaltet. Die Entlüftungsleitung wird im Leerlaufbetrieb geschlossen gehalten, so dass der Druck in der Druckleitung und der Trocknungseinrichtung nahezu konstant bleibt. Wird wieder in den Förderbetrieb gewechselt, sobald eine Schubphase vorliegt, wird fast unmittelbar wieder der Systemdruck erreicht und Druckluft in die Systemdruckleitung gefördert.

Wird ein Regenerationsbetrieb angefordert, da die Trocknungseinrichtung regeneriert werden soll, so wird die Druckluftzufuhr eingeschaltet und über den Abschaltwert hinaus solange aufrechterhalten, bis der Systemdruck den Umschaltdruck des Entlüftungssteuerventils überschreitet. Befindet sich die Druckluftaufbereitungseinrichtung bzw. das Druckluftversorgungssystem zum Zeitpunkt der Anforderung einer Regeneration im Leerlaufbetrieb, so wird unabhängig von der Steuerung des Wechsels zwischen Förderbetrieb und Leerlaufbetrieb über die Auswertung der Fahrsituation des Fahrzeugs die Druckluftzufuhr gemäß dem Förderbetrieb eingeschaltet.

Wird eine Regeneration der Trocknungseinrichtung angefordert, so wird der Schaltzustand des Governor-Ventils überwacht und der Steuereinheit, welche das elektrische Steuersignal für das Zufuhrsteuerventil erzeugt, ein Wechsel des Schaltzustandes angezeigt. Sobald ein Umschalten des Governor-Ventils bei Überschreiten des Umschaltdrucks erkannt ist, kann die Steuereinheit gemäß einer vorteilhaften Ausführungsform ein Absperren der Druckluftzufuhr veranlassen. Hierzu wird das Zufuhrsteuerventil betätigt und dadurch der Kompressor abgeschaltet.

Ein Wechsel des Schaltzustands des Entlüftungssteuerventils wird vorteilhaft mit einem dem Entlüftungssteuerventil zugeordneten Sensor erfasst, welcher einer Steuereinheit, die das Zufuhrsteuerventil ansteuert, den Schaltzustand des Entlüftungssteuerventils anzeigt. Der Sensor ändert mit dem Umschalten des Entlüftungssteuerventils seinen Ausgangswert. Der Sensor kann beispielsweise als elektrischer Schalter oder Wegsensor ausgebildet sein.

Auch ohne zusätzliche elektrische Bauteile am Entlüftungssteuerventil wird in einer weiteren Ausführungsform der Schaltzustand des Entlüftungssteuerventils aus laufenden Messungen eines den Systemdruck repräsentierenden Druckwertes ermittelt. Hierzu können die Messwerte eines Drucksensors in der Systemdruckleitung oder in den Druckluftverbraucherkreisen herangezogen werden. Da sich das Umschalten des Entlüftungssteuerventils und Freigabe des Regenerationspfads durch einen kontinuierlichen Druckabfall des Systemdrucks manifestiert, kann bei einer Auswertung des Druckverlaufs bei einem entsprechenden Druckabfall auf das Umschalten des Entlüftungssteuerventils geschlossen werden.

Das Volumen der im Regenerationsbetrieb zurück strömenden Druckluft ist durch das selbsttätige Umschalten und Rückschalten des Governor-Ventils bestimmt. Der Umschaltdruck und der Rückschaltdruck werden über eine Ventilfeder des Governor-Ventils und konstruktiv über die Flächenverhältnisse der druckbeaufschlagten Flächen im Ventil in den beiden Schaltstellungen so eingestellt, dass genau das für die vollständige Regeneration vorgesehene Luftvolumen durch den Regenerationspfad strömt.

Bei einer vorteilhaften Ausführungsform des Betriebsverfahrens wird für den Regenerationsbetrieb ein Abschaltwert des Systemdrucks oberhalb des Umschaltdrucks des Entlüftungssteuerventils vorgegeben. Dadurch wird die Druckluftzufuhr nicht unterbrochen, bis der Umschaltdruck des Governor-Ventils erreicht wird und die Regeneration eingeleitet wird. Sobald das Governor-Ventil umgeschaltet hat, öffnet das Entlüftungsventil und der Luftstrom vom Kompressor wird über das Entlüftungsventil abgeleitet, so dass der Druck in der Systemdruckleitung nicht weiter steigt. Zusätzlich kann nach Umschalten des Governor-Ventils die Energieaufnahme des Kompressors verringert werden, indem dem Zufuhrsteuerventil ein entsprechendes elektrisches Steuersignal zugeführt wird.

Um das Bedürfnis der Anforderung des Regenerationsbetriebs zu ermitteln, wird in einer bevorzugten Ausführungsform die von der Trocknungseinrichtung aufgenommene Feuchtigkeitsmenge erfasst wird und der Ermittlung des Regenerationsbedürfnisses zugrunde gelegt.

Der Druckluftverbrauch aus der Systemdruckleitung für den Regenerationsbetrieb ist dann minimal, wenn gemäß einer vorteilhaften Weiterbildung der Erfindung der Regenerationsbetrieb immer dann eingeleitet wird, wenn die aufgenommene Feuchtigkeitsmenge demjenigen Volumenwert der bis zum Rückschalten des Entlüftungssteuerventils regenerierbaren Feuchtigkeitsmenge entspricht. Das Volumen der regenerierbaren Feuchtigkeitsmenge ist über den Umschaltdruck und den Rückschaltdruck des Entlüftungssteuerventils eingestellt. Der Volumenwert der Feuchtigkeitsmenge, die zwischen Umschalten und Rückschalten des Entlüftungssteuerventils mit der dabei zurückströmenden Druckluftmenge regenerierbar ist, wird vorteilhaft über den Umschaltdruck und den Rückschaltdruck des Entlüftungssteuerventils und dem Fassungsvolumen der Druckluftbehälter bestimmt, die an die Systemdruckleitung angeschlossen sind und aus denen die Regenerationsluft zurückströmen kann.

Die Ermittlung bzw. Abschätzung der eingebrachten Feuchtigkeitsmenge kann dabei entweder durch einen Feuchtigkeitssensor oder durch Abschätzung der in Förderrichtung durchgeströmten Luftmenge erfolgen. Bevorzugt wird bei der Ermittlung der in der Trocknungseinrichtung aufgenommenen Feuchtigkeitsmenge zur Anforderung des Regenerationsbetriebs eine Prognose der zusätzlichen Feuchtigkeitsmenge berücksichtigt, die bis zum Erreichen des Umschaltdrucks des Governor-Ventils mit der weiterhin durch die Trocknungseinrichtung strömenden Luft eingebracht wird. Hierzu ist in der Steuereinheit, welche den Betriebsmodus der Druckluftaufbereitungseinrichtung über das Zufuhrsteuerventil bestimmt und den Regenerationsbetrieb bei Regenerationsbedarf einleitet, ein Prognosealgorithmus programmiert. Vorteilhaft wird zur genauen Bestimmung eines Zeitfensters bis zum Erreichen des Umschaltdrucks und zur Verbesserung der Genauigkeit der Prognose der bis zum Umschalten des Governor-Ventils noch eingebrachten Feuchtigkeitsmenge der aktuelle oder durchschnittliche Druckluftverbrauch des Fahrzeugs über die Zeit berücksichtigt.

In einer weiteren Ausführungsform kann der Fahrer eine Regeneration auch manuell anfordern. Alternativ zu der automatischen Einleitung des Regenerationsbetriebs über die Ermittlung der aufgenommenen Feuchtigkeitsmenge wird die Regeneration dann aufgrund der manuellen Anforderung durch den Fahrer eingeleitet. Das Bedürfnis oder eine günstige Gelegenheit einer manuell eingeleiteten Regeneration wird dem Fahrer bei Vorliegen vorgegebener Betriebszustände eines Fahrzeugs angezeigt, so dass eine sofortige Regeneration eingeleitet werden kann. Solche Betriebszustände liegen beispielsweise im Stillstand des Fahrzeugs vor. Bei einem Abstellen des Fahrzeugs beispielsweise über Nacht oder auch längere Zeiträume kann durch manuell eingeleitete Regeneration die Feuchtigkeit aus der Trocknungseinrichtung entfernt werden. Dadurch wird insbesondere bei kalter Umgebungsluft einer Vereisung der Feuchtigkeit in der Trocknungseinrichtung effektiv entgegen gewirkt. Im Stillstand bei laufendem Motor kann der Fahrer eine Regeneration beispielsweise durch einen separaten Taster oder durch die Kombination existierender Eingabemedien wie Gaspedal, Kupplung und Bremse anfordern.

Wird während der Regeneration durch andere Verbraucher wie Bremssystem oder Luftfederung des Fahrzeugs Luft aus dem Systemdruckleitung entnommen, verringert sich die Luftmenge, die zur Regeneration verwendet wurde. Ein Ausgleich gegebenenfalls zuwenig zurück geführter Regenerationsluft kann in nachfolgenden Regenerationen erfolgen. Die tatsächlich eingesetzte Luftmenge für die Regeneration kann ermittelt werden, indem der Druckverlauf im Zeitintervall zwischen Umschalten und Rückschalten des Entlüftungssteuerventils erfasst wird und daraus die rückgeströmte Luftmenge berechnet wird. Aus der rückgeströmten Luftmenge wird eine gegebenenfalls verbliebene Restfeuchtigkeitsmenge ermittelt und die Restfeuchtigkeitsmenge in zukünftigen Regenerationsbetriebsintervallen bei der Einleitung des Regenerationsbetriebs berücksichtigt. Die verbleibende Restfeuchtigkeitsmenge bildet einen Startwert bei der Erfassung der Feuchtigkeitsmenge in der Trocknungseinrichtung, welche die Steuereinheit einem Algorithmus zur Entscheidung über die Einleitung einer Regeneration zugrunde gelegt. Ist weniger Regenerationsluft zurückgeflossen als erwartet, so kann die errechnete verbleibende Restfeuchtigkeitsmenge für die Berechnung des nächsten Regenerationszeitpunkts herangezogen werden.

Vorteilhaft liegt der Abschaltwert des Systemdrucks, welcher im Förderbetrieb der Abschaltung der Druckluftzufuhr zugrundegelegt wird, innerhalb eines Druckbandes, welches durch den Umschaltdruck und den Rückschaltdruck des Entlüftungssteuerventils begrenzt ist. Auf diese Weise liegt der Abschaltwert für den Förderbetrieb nahe dem Umschaltdruck des Entlüftungssteuerventils, so dass ein breites Druckband für den Förderbetrieb gegeben ist. Bei einem Druckband für den Förderbetrieb von bspw. 8 bis 12,5 bar kann der Abschaltwert bei etwa 12,3 bar liegen, so dass einerseits das Druckband für den Förderbetrieb weitgehend ausgenutzt werden kann, andererseits eine sichere Abschaltung der Druckluftzufuhr vor dem Beginn einer ungewollten Regenerierung gewährleistet ist. Ein Regenerationsbetrieb wird von der Steuereinheit der Druckluftaufbereitungseinrichtung gezielt bei Bedarf eingeleitet, indem der Abschaltwert für den Förderbetrieb ignoriert wird und die Druckluftzufuhr aufrecht erhalten wird, bis der Systemdruck den Umschaltdruck des Entlüftungssteuerventils überschreitet. Gemäß einer vorteilhaften Ausführungsform wird der Steuereinheit für den Regenerationsbetrieb ein Abschaltwert für die Abschaltung der Druckluftzufuhr vorgegeben, welcher höher als der Umschaltdruck des Entlüftungssteuerventils ist, so dass der Systemdruck über den Umschaltdruck des pneumatischen Entlüftungssteuerventils angehoben wird.

In einer vorteilhaften Ausführungsform wird der Umschaltdruck des Entlüftungssteuerventils erfasst, mit Messwerten des jeweiligen Drucks aus vorhergehenden Regenerationsbetriebsintervallen verglichen und der Abschaltwert für die Abschaltung der Druckluftzufuhr im Förderbetrieb für spätere Regenerationsvorgänge an die festgestellte Abweichung des Umschaltdrucks angepasst. Dadurch können Änderungen beim Ansprechen des Entlüftungsventils auf den anliegenden Systemdruck ausgeglichen werden, welche gewollt oder aufgrund von Umwelteinflüssen eintreten können. Optional wird bei der Ermittlung einer Anpassung des Abschaltwerts für die Abschaltung der Druckluftzufuhr der Rückschaltdruck des Entlüftungssteuerventils berücksichtigt. Der Umschaltdruck und Rückschaltdruck kann durch leicht veränderte Justierung des Governor-Ventils unterschiedlich sein. Auch können sie sich durch Alterung des Governor-Ventils und Temperatureinflüsse verändern.

Das pneumatisch betätigbare Entlüftungssteuerventil ist in einer vorteilhaften Ausführungsform ein 3/2-Wege-Ventil, welches einen mit der Kompressorsteuerleitung verbundenen Arbeitsanschluss, einen mit der Systemdruckleitung verbundenen Versorgungsanschluss und einen Entlüftungsanschluss aufweist. Ein 3/2-Wege-Ventil ist kostengünstig verfügbar und kann eine Governor-Steuerung des Regenerationspfades bereitstellen, wobei die Initiierung der Betriebsarten der Druckluftaufbereitungseinrichtung durch die Steuerung des elektrisch betätigbaren Zufuhrsteuerventils erfolgt. Unabhängig von der Ansteuerung des elektrisch betätigbaren Zufuhrsteuerventils wird die weitere Druckluftzufuhr unterbunden, sobald der Systemdruck den Umschaltdruck des Entlüftungssteuerventils überschreitet. Das Entlüftungssteuerventil betätigt dann das Entlüftungsventil, wodurch der Druckluftstrom des Kompressors durch die Entlüftungsleitung geführt ist. Der maximale Systemdruck ist daher von dem Umschaltdruck des Entlüftungssteuerventils bestimmt und ein unerwünschter Druckanstieg in der Systemdruckleitung auch nach einem Ausfall von elektrischen Komponenten ausgeschlossen.

Die Steuereinheit, welche in einem Steuermodul angeordnet sein kann, ist zur Steuerung der vorstehend beschriebenen Ausführungsformen des Betriebsverfahrens ausgebildet. Sie umfasst insbesondere die entsprechenden Mittel, um Eingangssignale und Ausgangssignale für die Steuerung auszuwerten bzw. zu erzeugen. Die vorstehend beschriebenen Vorgehensweisen bei der Steuerung und Auswertung sind in entsprechenden Algorithmen in der Steuereinheit programmiert.

Die erfindungsgemäße Druckluftaufbereitungseinrichtung mit einem pneumatisch betätigbaren Entlüftungssteuerventil ist gemäß einem weiteren Aspekt der Erfindung Bestandteil eines Druckluftversorgungssystems, welches außer der Druckluftaufbereitungseinrichtung einen Kompressor, ein an die Systemdruckleitung angeschlossenes Mehrkreisschutzventil und eine elektronische Steuereinheit zur Erzeugung elektrischer Ventilsteuersignale umfasst. Erfindungsgemäß bilden die Druckluftaufbereitungseinrichtung, das Mehrkreisschutzventil und die Steuereinheit jeweils modulare Baugruppen, wobei das Zufuhrsteuerventil außerhalb der Baugruppe der Druckluftaufbereitungseinrichtung, nämlich einem Aufbereitungsmodul, angeordnet ist. Das Aufbereitungsmodul ist dadurch eine rein pneumatische Baugruppe ohne elektrisch betätigbare Bauteile. Der bauliche Gestaltungsspielraum bei der Gestaltung des Druckluftversorgungssystems ist ohne Berücksichtigung elektrischer Versorgungsanschlüsse an der Druckluftaufbereitungseinrichtung erweitert. Darüber hinaus bestehen durch die modulare Bauweise eine Vielzahl baulicher Kombinationsmöglichkeiten der modularen Baugruppen, um den jeweiligen Bedürfnissen beim Einsatz in Fahrzeugen einfach und kostengünstig entgegenzukommen.

Auch das Druckluftversorgungssystem kann mit dem oben beschriebenen Verfahren betrieben werden, wobei das elektrisch betätigbare Zufuhrsteuerventil über die Steuerung der Druckluftzufuhr die gewünschten Betriebsmodi der Druckluftaufbereitungseinrichtung bzw. des Aufbereitungsmoduls steuert.

Die modularen Baugruppen sind separate Bauteile, welche jedoch für den jeweiligen Anwendungsfall eines Druckluftversorgungssystems in der vorgesehenen Kombination lösbar oder auch fest miteinander verbunden sein können.

Das Steuermodul ist dabei eine modulare Baugruppe mit einer Steuereinheit, welche Steuersignale für das Zufuhrsteuerventil erzeugt und über das Steuersignal die Druckluftzufuhr zur Druckluftaufbereitungseinrichtung steuert.

Das elektrisch betätigbare Zufuhrsteuerventil wird vorteilhaft dem Kompressor zugeordnet, so dass eine sehr kurze und damit zuverlässige Verbindung zwischen dem Zufuhrsteuerventil und dem Kompressor erforderlich ist. Des Weiteren ist durch die kurze Verbindung zwischen dem Zufuhrsteuerventil und dem Kompressor nur ein elektrisches Kabel zur Betätigung des Zufuhrsteuerventils erforderlich. Auf eine längere Kompressorsteuerleitung, welche bei bekannten Anordnungen von Zufuhrsteuerventilen innerhalb von Druckaufbereitungseinrichtungen in der Nähe der Trocknungseinrichtung erforderlich waren, kann verzichtet werden. Auch die Signalübertragung ist durch die Anordnung des Zufuhrsteuerventils in der Nähe des Kompressors reduziert. Darüber hinaus ist das Volumen der kurzen Kompressorsteuerleitung zwischen dem Zufuhrsteuerventil und dem Kompressor sehr gering, was der Qualität der Signalübertragung zuträglich ist.

In einer bevorzugten Ausführungsform der Erfindung ist das Zufuhrsteuerventil in der Baugruppe der Steuereinheit, das heißt dem Steuermodul, angeordnet. Das Zufuhrsteuerventil wird in dieser Ausführungsform durch eine interne Signalleitung, das heißt eine innerhalb des Steuermoduls angeordnete Signalleitung, mit der Steuereinheit verbunden. Das Steuermodul weist dann einen Anschluss zur Anbindung der Kompressorsteuerleitung auf. Die Anordnung des Zufuhrsteuerventils in dem Steuermodul ist vorteilhaft, da das Steuermodul neben pneumatischer Versorgung auch, beispielsweise zur Messung der Druckverhältnisse in den Druckluftverbraucherkreisen, über elektrische Versorgung verfügt und daher das elektrische Zufuhrsteuerventil in dem erfindungsgemäßen modularen Druckluftversorgungssystem die elektrische Versorgung des Steuermoduls nutzen kann. Daher kann eine Schaltanforderung an das elektrische Zufuhrsteuerventil ohne zusätzliche elektrische Kabel und Stecker realisiert werden.

Sowohl das Aufbereitungsmodul als auch das Mehrkreisschutzventil sind dabei bevorzugt als rein pneumatische Baugruppen ausgebildet. Somit sind diese Baugruppen bevorzugt ohne elektrische Sensoren und elektrisch betätigte Ventile vorgesehen. Sofern elektrische Einrichtungen in der Baugruppe des Mehrkreisschutzventils vorgesehen sind, kann in einer weiteren vorteilhaften Ausführungsform das elektrisch betätigbare Zufuhrsteuerventil in die Baugruppe des Mehrkreisschutzventils integriert sein. Dort kann der Versorgungsanschluss des Zufuhrsteuerventils mit kurzen Strömungswegen, beispielsweise kurzen Kanälen in der Gehäusewandung des Mehrkreisschutzventils, an Leitungsteile im Mehrkreisschutzventil angeschlossen werden, in denen der Systemdruck herrscht.

Vorteilhaft ist ein Steuermodul, welches die Steuereinheit enthält, auf die Baugruppe des Mehrkreisschutzventils aufsetzbar und weist Leitungsabschnitte zu mindeststens einem Druckluftverbraucherkreis auf. Dabei ist in mindestens einem der Leitungsabschnitte der Druckluftverbraucherkreise ein Drucksensor angeordnet, welcher mit der Steuereinheit verbunden ist. Die Steuereinheit kann daher einen den Systemdruck repräsentierenden Druckwert in dem wenigstens einen Druckluftverbraucherkreis erfassen, in welchem der Drucksensor angeordnet ist. Mit dem gemessenen Druckwert wird das Zufuhrsteuerventil angesteuert, wobei sowohl im Förderbetrieb als auch im Regenerationsbetrieb der Druckluftaufbereitungseinrichtung präzise der vorgesehene Abschaltwert für die Druckluftzufuhr erfassbar ist.

Die Integration der Drucksensorik in das Steuermodul hat den Vorteil, dass keine weiteren Kabel und Stecker zur Signalübertragung benötigt werden. Auch kann das Steuermodul leicht ausgetauscht werden und ein verbessertes Steuermodul mit weiteren Fähigkeiten nachgerüstet werden.

In einer Weiterbildung der Erfindung kann in jedem der Druckluftverbraucherkreise ein mit der Steuereinheit verbundener Drucksensor angeordnet sein, so dass die Steuereinheit ausgehend von den Messergebnissen der Drucksensoren unterschiedliche Systemdrücke in den Druckluftverbraucherkreisen erkennen kann. Dabei kann mindestens einer der Drucksensoren zur Drucksteuerung, das heißt zum Abgleich mit dem Abschaltwert der Druckluftzufuhr, herangezogen werden.

Die Steuereinheit ist vorteilhaft zur parallelen Steuerung mehrerer Systeme eines Fahrzeugs ausgebildet, so dass mehrere Steueraufgaben mit einer gemeinsamen Steuereinheit erfüllt werden. Dadurch wird die Zahl der separaten elektrischen und pneumatischen Systeme im Fahrzeug verringert, was sich vorteilhaft auf die Fertigungskosten auswirkt. Die Messwerte der Drucksensoren im Steuermodul können in die weiteren steuerbaren Systeme des Fahrzeugs eingebunden werden, wie bspw. Antiblockiersysteme, elektronische Bremssysteme oder elektronische Parkbremssysteme. Die Steuerung erfolgt dann über eine gemeinsame Steuereinheit. Anders ausgedrückt können von mehreren Drucksensoren in unterschiedlichen Druckluftverbraucherkreisen, die für andere Systeme als die Druckluftversorgung erforderlich sind, wenigstens ein Drucksensor für die Steuerung des Druckluftzufuhrventils herangezogen werden. Vorteilhaft greift die Steuerung des Druckluftversorgungssystems auf einen oder mehrere Drucksensoren der Betriebsbremskreise des Fahrzeugs zurück.

In einer besonders bevorzugten Ausführungsform der Ausbildung des Druckluftversorgungssystems sind die elektronischen Steuereinrichtungen für weitere steuerbare Systeme in dem Steuermodul untergebracht, so dass die zur Verfügung stehende Elektronik kombiniert für mehrere Systeme genutzt wird. Besonders vorteilhaft kann die elektronische Steuereinheit des Druckluftversorgungssystems kombiniert werden mit einer elektronischen Parkbremse (EPH), wobei auch die Schaltventile des EPH-Systems in dem Steuermodul untergebracht werden können.

Weitere Ausführungsformen der Erfindung ergeben sich aus den Unteransprüchen und den Ausführungsbeispielen, die nachstehend anhand der Zeichnung näher erläutert sind. Es zeigen:
- Fig. 1 bis Fig. 7: pneumatische Schaltbilder von Druckluftaufbereitungseinrichtungen mit Steuerung des Regenerationspfades sowohl durch Zufuhrsteuerventil als auch Entlüftungssteuerventil,
- Fig. 8 und Fig. 9: pneumatische Schaubilder von Druckluftaufbereitungseinrichtungen mit einem pneumatisch betätigten Entlüftungssteuerventil,
- Fig. 10: ein pneumatisches Schaubild eines Druckluftversorgungssystems,
- Fig. 11: ein pneumatisches Schaubild einer Druckluftaufbereitungseinrichtung mit einem zusätzlichen Aufbereitungsmodul,
- Fig. 12: ein pneumatisches Schaubild einer Druckluftaufbereitungseinrichtung mit parallel angeordneten Aufbereitungsmodulen,
- Fig. 13: eine grafische Darstellung des Systemdruckverlaufs im Betrieb einer Druckluftaufbereitungseinrichtung gemäß Fig. 8, 9 oder 10,
- Fig. 14: eine grafische Darstellung des Systemdruckverlaufs bei einer Druckluftaufbereitungseinrichtung gemäß Fig. 11 und
- Fig. 15: ein Ablaufschema eines Betriebsverfahrens eines Druckluftversorgungssystems.

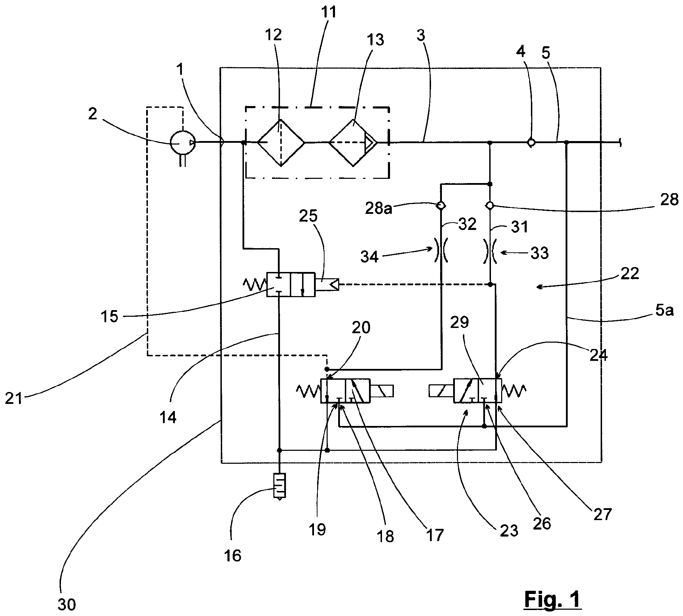

Fig. 1 bis 9 zeigen jeweils Druckluftaufbereitungseinrichtungen, in denen Druckluft zur Versorgung von Druckluftverbraucherkreisen eines Fahrzeuges aufbereitet wird.

Für gleiche oder einander entsprechende Elemente sind in den Zeichnungen dieselben Bezugszeichen verwendet.

Es wird im Folgenden zunächst der allen Ausführungsbeispielen gemeinsame Grundaufbau erläutert. Anschließend wird anhand der einzelnen Zeichnungsfiguren die Besonderheit des durch die jeweilige Zeichnungsfigur repräsentierten Ausführungsbeispiels erläutert.

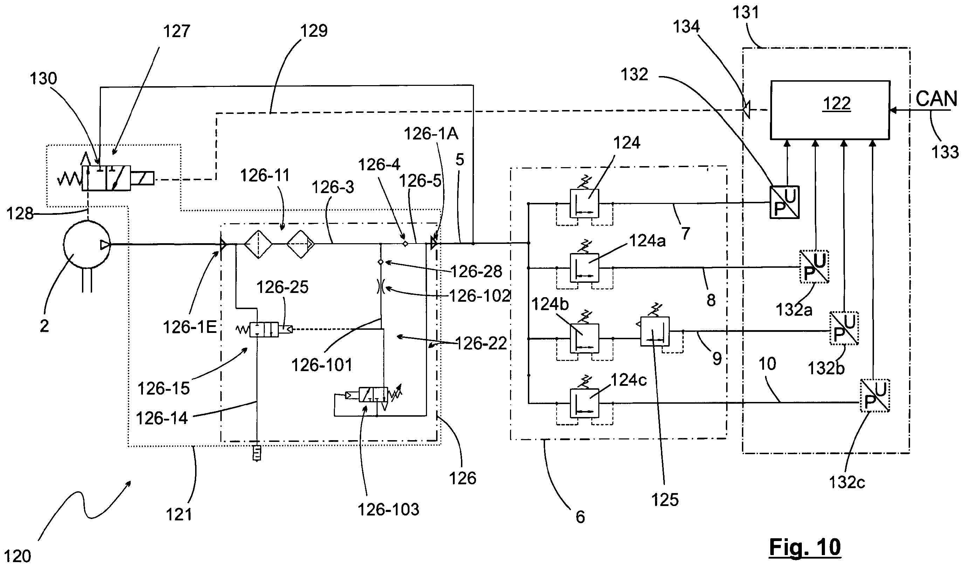

Die Druckluftaufbereitungseinrichtungen weisen jeweils einen Drucklufteingang 1 auf, an den ein Kompressor 2 anschließbar ist. Mit dem Drucklufteingang 1 ist eine Druckleitung 3 verbunden. An die Druckleitung 3 ist über ein Rückschlagventil 4 eine Systemdruckleitung 5 angeschlossen. An die Systemdruckleitung 5 kann ein Mehrkreisschutzventil 6 (vergl. Fig. 10) angeschlossen sein. Über das Mehrkreisschutzventil 6 werden einzelne Druckluftverbraucherkreise 7, 8, 9, 10, wie z.B. die Druckluftbremskreise eines Kraftfahrzeugs, versorgt.

In der Druckleitung 3 ist eine Trocknungseinrichtung 11 angeordnet, welche in sämtlichen hier gezeigten Ausführungsbeispielen jeweils ein Filter 12 und einen Abscheider 13 umfasst. Die Trocknungseinrichtung 11 kann aber auch nur aus einem Filter gebildet sein oder andere Einrichtungen zur Behandlung der durchströmenden Druckluft aufweisen. Die Trocknungseinrichtung 11 befreit die vom Kompressor 2 zugeführte Druckluft von Dampf und Schmutzpartikeln.

Zwischen dem Drucklufteingang 1 und der Trocknungseinrichtung 11 zweigt aus der Druckleitung 3 eine Entlüftungsleitung 14 ab, in der ein pneumatisch betätigbares Entlüftungsventil 15 angeordnet ist. Die Entlüftungsleitung 14 führt bei jedem der gezeigten Ausführungsbeispiele aus der Druckluftaufbereitungseinrichtung heraus und kann mit einer Entlüftungseinrichtung verbunden sein, welche hier durch einen Schalldämpfer 16 repräsentiert ist.

Jede der Druckluftaufbereitungseinrichtungen gemäß den Ausführungsbeispielen der Fig. 1 bis Fig. 9 weisen ein elektrisch betätigbares Zufuhrsteuerventil 17 auf. Das Zufuhrsteuerventil 17 ist als 3/2-Wege-Ventil ausgebildet, dessen Versorgungsanschluss 18 an die Systemdruckleitung 5 angeschlossen ist. Alternativ zu jedem elektrisch betätigbaren Magnetventil der Druckluftaufbereitungseinrichtung kann eine Kombination von pneumatischem 3/2-Wege-Ventil mit einem elektrischen Vorsteuerventil vorgesehen sein, wobei das Vorsteuerventil bei Betätigung die Systemdruckleitung zum Steuereingang des pneumatischen Ventils durchschaltet.

Ein Entlüftungsanschluss 19 des Zufuhrsteuerventils 17 ist in den Ausführungsbeispielen mit der Entlüftungsleitung 14 verbunden, kann aber auch direkt in die Umgebungsluft abführen. An einen Arbeitsanschluss 20 des Zufuhrsteuerventils 17 ist eine Kompressorsteuerleitung 21 angeschlossen. Unter Arbeitsanschluss wird im Folgenden derjenige Anschluss eines Wegeventils verstanden, an den die vom jeweiligen Ventil zu steuernde Einrichtung angeschlossen ist und welcher mit dem mindestens einen weiteren Anschluss des jeweiligen Ventils verbindbar ist. Bei dem 3/2-Wege-Ventil ist der Arbeitsanschluss 20 alternativ mit dem Versorgungsanschluss 18 oder dem Entlüftungsanschluss 19 verbindbar.

Über die Kompressorsteuerleitung 21 ist die Druckluftzufuhr vom Kompressor 2 zum Drucklufteingang 1 direkt steuerbar. Hierzu wirkt die Kompressorsteuerleitung 21 auf ein druckbetätigbares Zufuhrsteuerelement. Das Zufuhrsteuerelement kann ein druckbetätigbarer Steuerschalter des Kompressors 2 sein, welcher bei pneumatischer Ansteuerung über die Kompressorsteuerleitung 21 den Kompressor 2 ausschaltet, beispielsweise über eine Kupplung. Alternativ kann als druckbetätigbares Steuerelement ein schaltbarer Steuerauslass des Kompressors vorgesehen sein, der bei Betätigung durch die Kompressorsteuerleitung den vom Kompressor 2 abgegebenen Kompressorstrom ableitet.

Das Zufuhrsteuerventil 17 befindet sich in der unbestromten Grundstellung in einer Schaltstellung, in der die Kompressorsteuerleitung 21 mit der Entlüftungsleitung 14 verbunden ist. Zur Abschaltung der Druckluftzufuhr wird dem Zufuhrsteuerventil 17 ein entsprechendes elektrisches Signal zugeleitet. Das Zufuhrsteuerventil 17 wechselt im bestromten Zustand in eine Schaltstellung, in der sein Arbeitsanschluss 20 mit dem Versorgungsanschluss 18 verbunden ist und daher der Systemdruck aus der Systemdruckleitung 5 in die Kompressorsteuerleitung 21 und damit letztlich zur Abschaltung des Kompressors 2 durchgeschaltet wird.

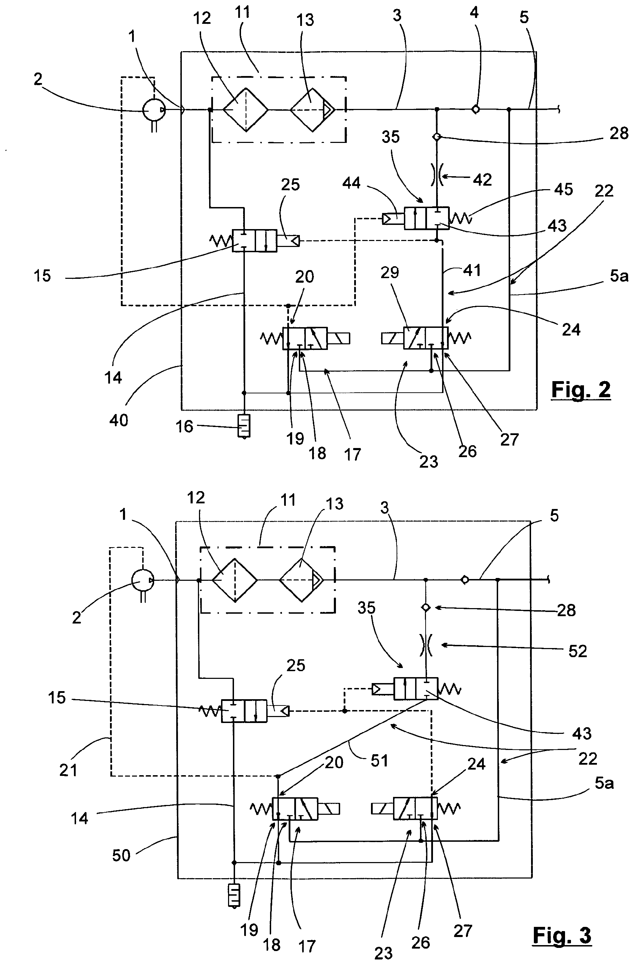

Zur bedarfsweisen Regeneration der Trocknungseinrichtung 11 ist ein Regenerationspfad 22 vorgesehen, welcher abhängig von der Schaltstellung eines Entlüftungssteuerventils 23 mit der Systemdruckleitung 5 verbindbar ist und zwischen der Trocknungseinrichtung 11 und dem Rückschlagventil 4 in die Druckleitung 3 einmündet. Der Regenerationspfad 22 kann anstelle der Systemdruckleitung 5 mit einer an die Systemdruckleitung 5 angeschlossenen Leitung, insbesondere einem Druckluftverbraucherkreis, verbunden werden, wenn trockene Luft durch den Regenerationspfad zurück zur Trocknungseinrichtung geführt werden soll. In den Ausführungsbeispielen nach Fig. 1 und Fig. 2 und Fig. 8 und Fig. 9 ist das Entlüftungssteuerventil 23 in dem Regenerationspfad 22 angeordnet und bestimmt mit seiner Schaltstellung unmittelbar die Durchgängigkeit des Regenerationspfads 22. In den Ausführungsbeispielen nach den Fig. 3 bis 7 steuert das Entlüftungssteuerventil über seine Schaltstellung eine Regenerationsventilanordnung im Regenerationspfad, so dass die Freigabe des Regenerationspfads von der Schaltstellung des Entlüftungssteuerventils 23 abhängt.

Das Entlüftungssteuerventil 23 ist ein 3/2-Wege-Ventil, dessen Arbeitsanschluss 24 mit dem pneumatischen Steuereingang 25 des Entlüftungsventils 15 verbunden ist. Ein Versorgungsanschluss 26 des Entlüftungssteuerventils 23 ist mit der Systemdruckleitung 5 über eine Versorgungsleitung 5a und ein Entlüftungsanschluss 27 des Entlüftungssteuerventils 23 mit der Entlüftungsleitung 14 verbunden. In der Versorgungsleitung 5a herrscht immer der gleiche Druck wie in der Systemdruckleitung 5. Die pneumatische Beziehung wird durch die vergleichbaren Bezugszeichen der Systemdruckleitung 5 und der Versorgungsleitung 5a hervorgehoben. Durch Betätigen des Entlüftungssteuerventils 23 kann in allen Ausführungsbeispielen der Steuereingang 25 des Entlüftungsventils 15 mit der Systemdruckleitung 5 verbunden werden, so dass die Entlüftungsleitung 14 freigegeben wird. Im Abblasebetrieb (cold mode) der Druckluftaufbereitungseinrichtung kann dann bei laufendem Kompressor 2 warme Druckluft durch das Entlüftungsventil 15 geschickt werden. Eine Durchströmung des Regenerationspfades 22 in Richtung der Systemdruckleitung 5 oder zur Entlüftungsleitung 14 über das unbetätigte Entlüftungssteuerventil 23, welche unerwünscht ist, wird durch eine Sperreinrichtung, bspw. ein Rückschlagventil 28, verhindert.

Alternativ zur Verbindung über die Versorgungsleitung 5a können die Versorgungsanschlüsse 26 und 19 des Zufuhrsteuerventils 17 und des Entlüftungssteuerventils 23 auch über einen der Druckluftverbraucherkreise 7, 8, 9, 10 (Fig. 10) versorgt werden, in denen ein den Systemdruck repräsentierender Druck herrscht.

Die Durchgängigkeit des Regenerationspfades 22 ist in den Ausführungsbeispielen gemäß Fig. 1 bis 7 an die Stellung sowohl des Entlüftungssteuerventils 23 als auch die Schaltstellung des Zufuhrsteuerventils 17 geknüpft. Dadurch ist sichergestellt, dass ausschließlich im Regenerationsbetrieb, wenn die Durchströmung des Regenerationspfades in Richtung der Trocknungseinrichtung 11 gewünscht ist, der Regenerationspfad 22 mit seinem vollen Durchgangsquerschnitt freigegeben ist. Einer unerwünschten Druckreduzierung in der Systemdruckleitung und nachgeordneten Druckluftbehältern durch abströmende Druckluft in anderen Betriebsarten als im Regenerationsbetrieb ist dadurch entgegengewirkt.

Das Entlüftungssteuerventil 23 ist in den Ausführungsbeispielen einer Druckluftaufbereitungseinrichtung gemäß Fig. 1 bis 7 ein elektrisch betätigbares Magnetventil 29. Das Entlüftungssteuerventil 23 und das Zufuhrsteuerventil 17 können daher von einer elektronischen Steuereinheit ähnlich der Steuereinheit 122 gemäß Fig. 10 präzise und aufeinander abgestimmt mit den jeweils vorgesehenen elektrischen Steuersignalen angesteuert werden.

In Fig. 1 ist eine Druckluftaufbereitungseinrichtung 30 dargestellt, bei welcher der Regenerationspfad eine an das Entlüftungssteuerventil 23 angeschlossenen Regenerationsdruckleitung 31 und eine an das Zufuhrsteuerventil 17 angeschlossene Parallelleitung 32 umfasst. In der Regenerationsdruckleitung 31, welche an den Arbeitsanschluss 24 des Entlüftungssteuerventils 23 angeschlossen ist, ist eine erste Blende 33 angeordnet und in der Parallelleitung 32 eine zweite Blende 34 angeordnet. Der Steuereingang 25 des Entlüftungsventils 15 ist zwischen der ersten Blende 33 und dem Entlüftungssteuerventil 23 mit der Regenerationsdruckleitung 31 verknüpft, so dass die erste Blende 33 einen Staudruck aufbauen kann, mit dem der Steuereingang 25 mit größtmöglichem Druck und daher unmittelbar geschaltet werden kann.

Sowohl in der Regenerationsdruckleitung 31 als auch in der Parallelleitung 32 ist jeweils ein Rückschlagventil 28, 28a angeordnet, welche eine ungewünschte Rückströmung sowohl in die Regenerationsdruckleitung 31 oder in die Parallelleitung 32 verhindern.

Der Regenerationspfad 22 ist auf zwei parallele Leitungen, nämlich die Regenerationsdruckleitung 31 und die Parallelleitung 32 aufgeteilt, welche unabhängig voneinander durch Magnetventile, nämlich das Entlüftungssteuerventil 23 und das Zufuhrsteuerventil 17, beherrscht werden. Es ist daher möglich, im Regenerationsbetrieb durch Betätigung sowohl des Entlüftungssteuerventils 23 als auch des Zufuhrsteuerventils 17 einen großen Durchgangsquerschnitt des Regenerationspfades 22 freizugeben und so einen kräftigen Regenerationsluftstrom durch die Trocknungseinrichtung 11 zu schicken. Dabei durchströmt jeden der parallelen Leitungszweige des Regenerationspfades 22 ein im Vergleich zum Gesamtvolumen geringer Teilstrom, wodurch für das Entlüftungssteuerventil 23 und das Zufuhrsteuerventil 17 kleine und daher kostengünstige Magnetventile eingesetzt werden können.

In den Fig. 2 bis 7 sind Ausführungsbeispiele von Druckluftaufbereitungseinrichtungen gezeigt, bei denen der Regenerationspfad 22 ausschließlich durch kumulative Betätigung sowohl des Entlüftungssteuerventils 23 als auch des Zufuhrsteuerventils 17 im Regenerationsbetrieb freigebbar ist. Nur bei gleichzeitigem Vorliegen der für den Regenerationsbetrieb vorgesehenen Schaltstellungen des Zufuhrsteuerventils 17 und des Entlüftungssteuerventils 23 wird der Regenerationspfad freigegeben und bleibt geschlossen, wenn entweder das Zufuhrsteuerventil 17 oder das Entlüftungssteuerventil 23 oder beide Ventile unbetätigt bleiben. In den Ausführungsbeispielen der Fig. 2 bis 4 sind zur "Und-Verknüpfung" des Entlüftungssteuerventils 23 und des Zufuhrsteuerventils 17 im Regenerationsbetrieb entweder das Zufuhrsteuerventil 17 oder das Entlüftungssteuerventil 23 sowie eine Regenerationsventilanordnung 35 in dem Regenerationspfad 22 angeordnet. Das jeweils andere, nicht im Regenerationspfad 22 angeordnete Magnetventil, also entweder das Entlüftungssteuerventil 23 oder das Zufuhrsteuerventil 17, ist mit der Regenerationsventilanordnung 35 verbunden, um die Regenerationsventilanordnung 35 zu steuern.

In Fig. 2 ist eine Druckluftsteuereinrichtung 40 gezeigt, bei der eine an das Entlüftungssteuerventil 23 angeschlossene Regenerationsdruckleitung 41 Teil des Regenerationspfades 22 ist. Der Regenerationspfad 22, welcher einen Bypass zum Rückschlagventil 4 an der Druckleitung 3 darstellt, ist in einem ersten Abschnitt durch die Versorgungsleitung 5a gebildet, an die das Entlüftungssteuerventil 23 angeschlossen ist. Ein zweiter Abschnitt des Regenerationspfades 22 ist durch die Regenerationsdruckleitung 41 gebildet. In der Regenerationsdruckleitung 41 ist das Rückschlagventil 28 des Regenerationspfades 22 angeordnet sowie eine Blende 42.

In einem Abschnitt der Regenerationsdruckleitung 41 zwischen der Einmündung in die Druckleitung 3 und der Anknüpfung des Steuereingangs 25 des Entlüftungsventils 15 ist die Regenerationsventilanordnung 35 angeordnet. Die Regenerationsventilanordnung 35 ist im vorliegenden Ausführungsbeispiel ein pneumatisch betätigbares Regenerationsventil 43, dessen Steuereingang 44 an den Arbeitsanschluss 20 des Zufuhrsteuerventils 17 geknüpft ist. Das Regenerationsventil 43 ist ein 2/2-Wege-Ventil, welches in unbetätigtem Zustand den Regenerationspfad 22 geschlossen hält. Sobald der Steuereingang 44 bei Betätigen des Zufuhrsteuerventils 17 mit der Versorgungsleitung 5a und dann mit der Systemdruckleitung 5 verbunden wird, wechselt das Regenerationsventil 43 seine Schaltstellung und gibt den Regenerationspfad 22 frei. Sobald das Zufuhrsteuerventil 17 nicht mehr mit einem elektrischen Steuersignal versorgt wird, daher seine Schaltstellung wechselt und die Kompressorsteuerleitung 21 entlüftet, wird auch das pneumatische Schaltsignal am Steuereingang 44 des Regenerationsventils 43 unterbrochen und das Regenerationsventil 43 wechselt aufgrund der Rückstellkraft seiner Ventilfeder 45 den Schaltzustand.

Der Regenerationspfad 22 ist damit nur dann freigegeben, wenn gleichzeitig das Entlüftungssteuerventil 23 und das Zufuhrsteuerventil 17 betätigt werden. Nur dann betätigen das Entlüftungssteuerventil 23 und das Zufuhrsteuerventil 17 gemeinsam die Regenerationsventilanordnung 35.

In der Druckluftaufbereitungseinrichtung 40 ist das Zufuhrsteuerventil 17 ausschließlich als Schalter zur pneumatischen Betätigung einerseits des Kompressors 2 und andererseits der Regenerationsventilanordnung 35 vorgesehen. In keiner Betriebsart der Druckluftaufbereitungseinrichtung 40 ist eine dauerhafte Durchströmung des Zufuhrsteuerventils 17 mit Luft, die zur Regeneration verwendet wird, vorgesehen. Das Zufuhrsteuerventil 17 ist ausschließlich zur Übertragung von pneumatischen Schaltsignalen angeordnet. Da praktisch kein Volumendurchsatz beim Zufuhrsteuerventil 17 erfolgt, reichen Magnetventile mit kleinerem Öffnungsquerschnitt und schwächeren Ventilfedern aus, um die Funktion des Zufuhrsteuerventils 17 zu gewährleisten. Es können daher kleine und kostengünstige Magnetventile als Zufuhrsteuerventil 17 eingesetzt werden.

Fig. 3 zeigt eine Druckluftaufbereitungseinrichtung 50 mit einem elektrisch betätigbaren Zufuhrsteuerventil 17 und einem ebenfalls elektrisch betätigbaren Entlüftungssteuerventil 23, wobei das Zufuhrsteuerventil 17 im Regenerationspfad 22 liegt. Der Regenerationspfad 22 ist in einem ersten Abschnitt durch die an das Zufuhrsteuerventil 17 angeschlossene Versorgungsleitung 5a gebildet. Der zweite Abschnitt des Regenerationspfades ist durch eine Regenerationsdruckleitung 51 gebildet, welche den Arbeitsanschluss des Zufuhrsteuerventils 17 mit der Druckleitung 3 verbindet. In der Regenerationsdruckleitung 51 ist ähnlich der bereits beschriebenen Anordnung das Rückschlagventil 28 des Regenerationspfades 22 sowie eine Blende 52 angeordnet.

In der Regenerationsdruckleitung 51 ist die Regenerationsventilanordnung 35 vorgesehen, welche auch in diesem Ausführungsbeispiel wie bereits zur Fig. 2 beschrieben durch ein pneumatisch betätigbares Magnetventil 43 gebildet ist. Um Unterschied zum Ausführungsbeispiel gemäß Fig. 2 ist bei der Druckluftaufbereitungseinrichtung 50 gemäß Fig. 3 der Steuereingang 44 des Magnetventils 43 mit dem Entlüftungssteuerventil 23 verbunden. Das Entlüftungssteuerventil 23 schaltet demnach gleichzeitig das Entlüftungsventil 15 als auch die Regenerationsventilanordnung 35, wodurch praktisch gleichzeitig der Regenerationspfad 22 und die Entlüftungsleitung 15 freigegeben werden. Da in keiner Betriebsart der Druckluftaufbereitungseinrichtung 50 ein effektiver Durchsatz im Entlüftungssteuerventil 23 erfolgen muss, sondern das Entlüftungssteuerventil 23 lediglich zur pneumatischen Schaltung eingesetzt wird, können kleine und kostengünstige Magnetventile als Entlüftungssteuerventil 23 eingesetzt werden. Im Gegensatz zu bekannten Anordnungen kann somit auch bei undichter Druckleitung zwischen dem Kompressor und der Druckluftaufbereitungseinrichtung kein Druck entweichen.

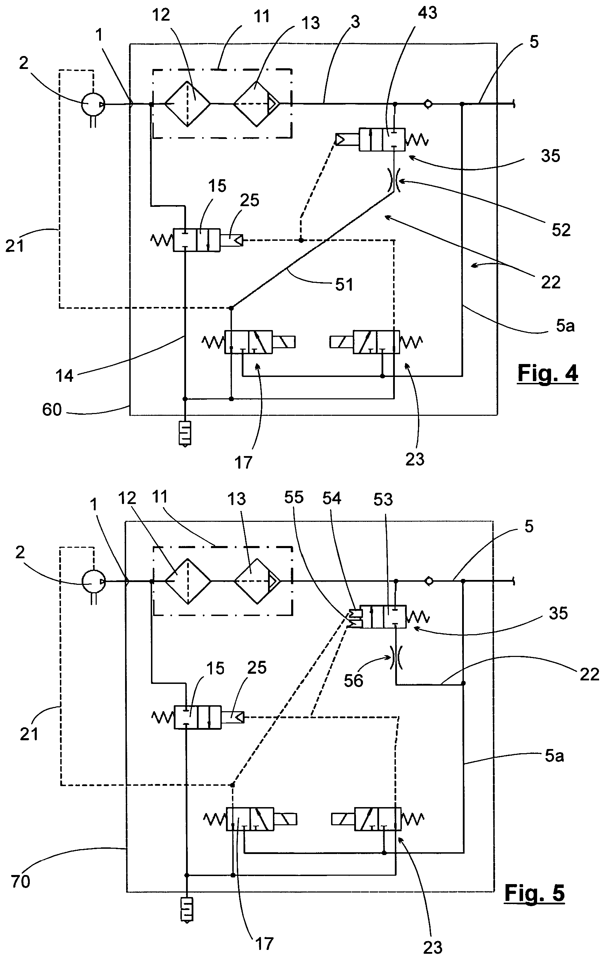

Fig. 4 zeigt eine Druckluftaufbereitungseinrichtung 60, welche bis auf die nachfolgenden Unterschiede dem Ausführungsbeispiel der Fig. 3 entspricht. Auch bei der Druckluftaufbereitungseinrichtung 60 ist in dem Regenerationspfad 22 neben der Regenerationsventilanordnung 35 das Zufuhrsteuerventil 17 angeordnet. Das Entlüftungssteuerventil 23 dient der pneumatischen Betätigung einerseits des Entlüftungsventils 15 und andererseits der Regenerationsventilanordnung 35.

Im Unterschied zu dem Ausführungsbeispiel gemäß Fig. 3 weist die Druckluftaufbereitungseinrichtung 60 kein Rückschlagventil im Regenerationspfad 22 auf. Fig. 4 zeigt beispielhaft auf, dass ein Rückschlagventil in dem Regenerationspfad 22 optional angeordnet werden kann, jedoch in vielen Anwendungsfällen nicht erforderlich ist. Die Funktion der Absperrung des Regenerationspfads gegen unerwünschte Durchströmung im Förderbetrieb wird bei der Druckluftaufbereitungseinrichtung 60 durch die Regenerationsventilanordnung 35 erfüllt.

Ist das Entlüftungssteuerventil 23 betätigt und damit das Entlüftungsventil 15 geöffnet, so ist auch die Druckleitung 3 drucklos und es kann keine Rückströmung entgegen der gewünschten Strömungsrichtung im Regenerationspfad 22 stattfinden. Ist hingegen das Entlüftungssteuerventil 23 nicht betätigt und ist dadurch auch die Regenerationsventilanordnung 35 nicht betätigt, so ist der Regenerationspfad 22 in der Regenerationsventilanordnung 35 unterbrochen, so dass auch in dieser Schaltstellung keine Rückströmung entgegen der gewünschten Strömungsrichtung im Regenerationspfad 22 stattfinden kann. In den Ausführungsbeispielen von Druckluftaufbereitungseinrichtungen mit Regenerationsventilanordnung im Regenerationspfad ist daher meistens ein Rückschlagventil im Regenerationspfad nicht erforderlich und vielmehr optional.

Fig. 5 bis 7 zeigen Druckluftaufbereitungseinrichtungen, bei denen jeweils im Regenerationspfad 22 nur die Regenerationsventilanordnung 35 angeordnet ist und sowohl das Zufuhrsteuerventil 17 als auch das Entlüftungssteuerventil 23 außerhalb des Regenerationspfades 22 vorgesehen sind. Sowohl das Zufuhrsteuerventil 17 als auch das Entlüftungssteuerventil 23 werden dabei ausschließlich für pneumatische Steueraufgaben eingesetzt. Das Zufuhrsteuerventil 17 und das Entlüftungssteuerventil 23 können daher kleine und daher kostengünstige Magnetventile sein.

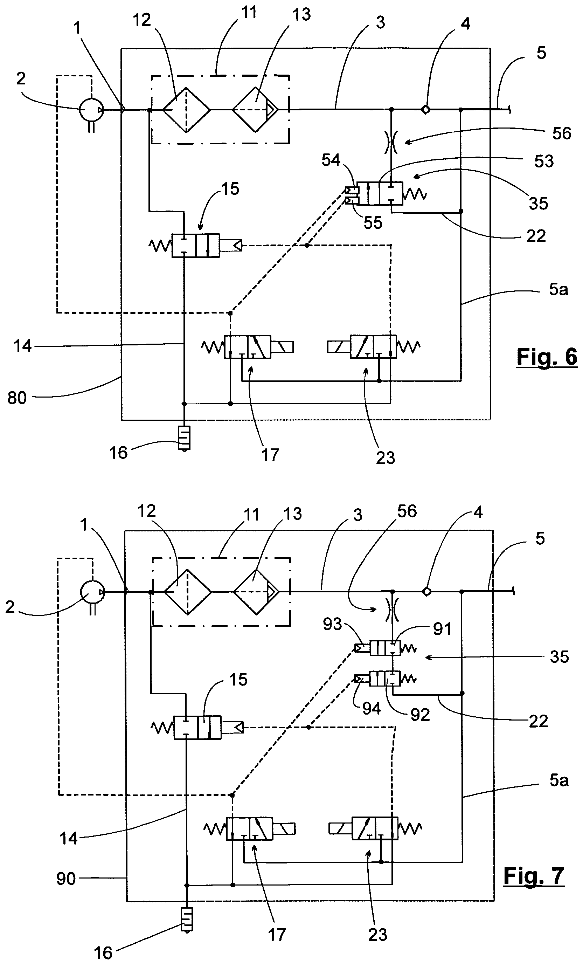

In den Ausführungsbeispielen gemäß Fig. 5 und 6 ist die Regenerationsventilanordnung 35 im Regenerationspfad 22 jeweils ein als 2/2-Wege-Ventil ausgebildetes Regenerationsventil 53 mit zwei pneumatischen Steuereingängen 54, 55. Das Regenerationsventil 53 befindet sich dabei im unbetätigten Zustand in einer Schaltstellung, in welcher das Regenerationsventil 53 nicht durchgängig ist und daher der Regenerationspfad 22 abgesperrt ist. Das Regenerationsventil 53 wechselt nur dann gegen die Rückstellkraft einer Ventilfeder die Schaltstellung, wenn beide pneumatischen Steuereingänge 54, 55 mit dem erforderlichen Steuerdruck beaufschlagt werden. Der Steuereingang 54 ist mit dem Zufuhrsteuerventil 17 und der Steuereingang 55 mit dem Entlüftungssteuerventil 23 verbunden. Die Steuereingänge 54, 55 sind dabei so ausgelegt, dass keiner der Steuereingänge 54, 55 allein die Rückstellkraft die Ventilfeder überwinden kann. Erst bei gleichzeitiger Betätigung des Zufuhrsteuerventils 17 und des Entlüftungssteuerventils 23 und damit Betätigung beider Steuereingänge 54, 55 des Regenerationsventil 53, wird der Regenerationspfad 22 freigegeben.

In dem Regenerationspfad 22 ist außer dem Regenerationsventil 53, welches die Regenerationsventilanordnung 35 bildet, eine Blende 56 angeordnet. Bei der Druckluftaufbereitungseinrichtung 70 gemäß Fig. 5 ist das Regenerationsventil 53 näher an der Druckleitung 3 angeordnet als die Blende 56.

Wie das Ausführungsbeispiel einer Druckluftaufbereitungseinrichtung 80 gemäß Fig. 6 zeigt, kann alternativ zu der Anordnung gemäß Fig. 5 die Blende 56 im Regenerationspfad 22 näher an der Druckleitung 3 positioniert werden als das 2/2-Wege-Ventil. In weiteren nicht gezeigten Ausführungsbeispielen sind die Blenden in die Ventile der Regenerationsventilanordnung 35 integriert.

Fig. 7 zeigt eine Druckluftaufbereitungseinrichtung 98, bei der im Unterschied zu den Ausführungsbeispielen der Fig. 5 und 6 die Regenerationsventilanordnung 35 durch ein erstes Regenerationsventil 91 mit einem Steuereingang 93 und ein in Reihe geschaltetes zweites Regenerationsventil 92 mit einem Steuereingang 94 gebildet ist. Der Steuereingang 93 des ersten Regenerationsventils 91 ist dabei mit dem Zufuhrsteuerventil 17 und der Steuereingang 94 des zweiten Regenerationsventils 92 mit dem Entlüftungssteuerventil 13 verbunden. Die Blende 56 und die Regenerationsventile 91, 92 können dabei mit weitgehend gleichwertiger Wirkung in unterschiedlicher Reihenfolge angeordnet sein.

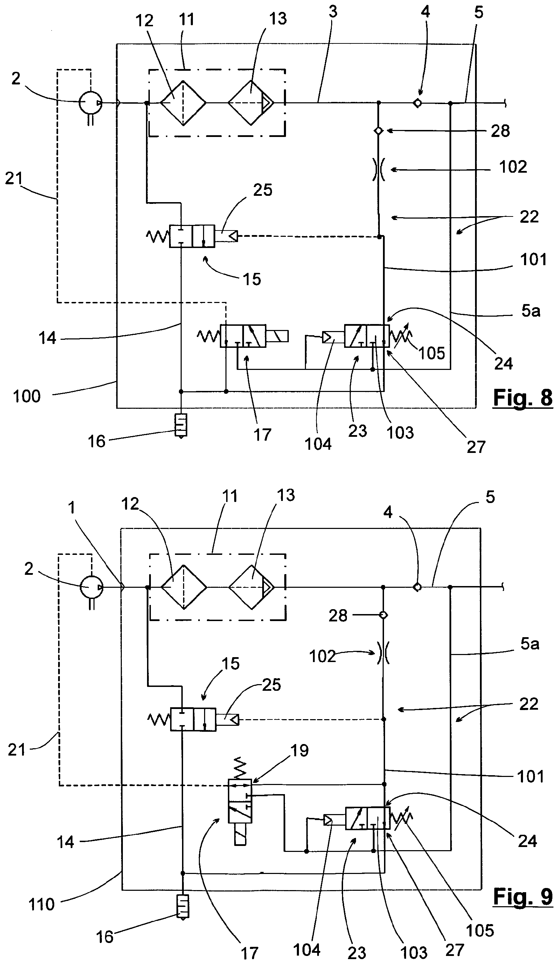

In Fig. 8 ist eine Druckluftaufbereitungseinrichtung 100 dargestellt, bei der das Entlüftungssteuerventil 23 im Regenerationspfad 22 angeordnet ist. Der Regenerationspfad 22 besteht in seinem ersten Abschnitt aus der Versorgungsleitung 5a und in seinem zweiten Abschnitt aus einer Regenerationsdruckleitung 101, welche einerseits an einen Arbeitsanschluss 24 des Entlüftungssteuerventils 23 angeschlossen ist und andererseits in die Druckleitung 3 einmündet. In der Regenerationsdruckleitung 101 ist in bereits beschriebener Weise das Rückschlagventil 28 des Regenerationspfads 22 angeordnet sowie eine Blende 102. Das Entlüftungsventil 15 ist mit seinem Steuereingang 25 an die Regenerationsdruckleitung 101 angeschlossen und wird somit von dem Entlüftungssteuerventil 23 gesteuert.

Das Entlüftungssteuerventil 23 ist im Unterschied zu den Ausführungsbeispielen der Fig. 1 bis 7 ein pneumatisch betätigbares Governor-Ventil 103. Das Governor-Ventil 103 ist ein 3/2-Wege-Ventil, dessen pneumatischer Steuereingang 104 an die Versorgungsleitung 5a angeschlossen ist. Die erfindungsgemäße Funktion ist gegeben, wenn der pneumatische Steuereingang 104 von einem Drucksignal beherrscht wird, das dem Systemdruck entspricht. Durch den Anschluss an die Versorgungsleitung 5a ist der Steuereingang 104 des Governor-Ventils 103 ständig von dem Systemdruck beaufschlagt, welcher in der Systemdruckleitung 5 herrscht. Alternativ kann daher der pneumatische Steuereingang 104 auch mit einem der nicht druckbegrenzten Druckluftverbraucherkreise 7, 8, 10 (vgl. Fig. 10) verbunden sein. In der gezeigten ersten Schaltstellung des Governor-Ventils 103 ist die Regenerationsdruckleitung 101 mit dem Entlüftungsanschluss 27 des Governor-Ventils 103 verbunden und daher der Regenerationspfad 22 geschlossen. Der Entlüftungsanschluss 27 des Governor-Ventils 103 ist im vorliegenden Ausführungsbeispiel an die Entlüftungsleitung 14 angeschlossen.

Sobald der Systemdruck den Umschaltdruck des Governor-Ventils 103 erreicht, bei dem die durch den Systemdruck am Steuereingang 104 entstehende Steuerkraft groß genug ist, um die Ventilfeder 105 des Governor-Ventils 103 zu überwinden, wechselt das Governor-Ventil 103 selbsttätig in die zweite Schaltstellung, in der die Regenerationsdruckleitung 101 mit der Versorgungsleitung 5a und damit der Systemdruckleitung 5 verbunden ist. Die Ventilfeder 105 ist einstellbar, so dass über die Federkraft der Ventilfeder 105 der Umschaltdruck des Governor-Ventils 103 einstellbar ist.

In der zweiten Schaltstellung bei betätigtem Governor-Ventil 103 wird der Systemdruck zum Steuereingang 25 des Entlüftungsventils 15 durchgeschaltet und damit die Entlüftungsleitung 14 freigegeben. In diesem Schaltzustand der Druckluftaufbereitungseinrichtung 100 wird der Regenerationsbetrieb eingeleitet. Dabei strömt trockene Systemluft durch den Regenerationspfad 2 über die Druckleitung und entgegen der Strömungsrichtung im Förderbetrieb durch die Trocknungseinrichtung 11 und schließlich über die Entlüftungsleitung 14 ab. Sobald der Systemdruck unter einen Rückschaltdruck fällt, bewegt die Ventilfeder das Governor-Ventil 103 selbständig zurück in die erste Schaltstellung. Damit wird der Regenerationspfad 22 geschlossen, so dass eine weitere Rückströmung zur Trocknungseinrichtung 11 unterbunden ist. Der Rückschaltdruck ist bestimmt durch den Umschaltdruck abzüglich einer gewissen Druckhysterese, welche durch die Charakteristik des Governor-Ventils bestimmt ist.

Das Zufuhrsteuerventil 17 ist ein elektrisch betätigbares 3/2-Wege-Ventil, welches über eine Kompressorsteuerleitung 21 zum Kompressor 2 die Druckluftzufuhr durch Ein- und Ausschalten des Kompressors steuert.

Fig. 9 zeigt eine Druckluftaufbereitungseinrichtung 110, welche bis auf die nachstehenden Unterschiede der Druckluftaufbereitungseinrichtung 100 gemäß Fig. 8 entspricht, also ein druckgesteuertes Governor-Ventil 103 als Entlüftungssteuerventil 23 aufweist.

Das Zufuhrsteuerventil 17 der Druckluftaufbereitungseinrichtung 110 ist mit seinem Entlüftungsanschluss 19 mit der Regenerationsdruckleitung 101 des Governor-Ventils 103 verbunden. Die Kompressorsteuerleitung 21 zum Kompressor kann dadurch zum einen vom elektrischen Zufuhrsteuerventil 17 mit Druck beaufschlagt werden, indem das Zufuhrsteuerventil 17 durch Betätigung in seine zweite Schaltstellung gebracht wird und damit die Kompressorsteuerleitung 21 direkt mit der Versorgungsleitung 5a verbindet. Zum anderen kann die Druckluftzufuhr auch in der ersten Schaltstellung des Zufuhrsteuerventils 17 durch das Governor-Ventil 103 abgeschaltet werden. Sobald das Governor-Ventil 103 nach Erreichen des Umschaltdrucks seine Schaltstellung wechselt und den Regenerationspfad öffnet, geht damit eine Belüftung der Kompressorsteuerleitung 21 einher.

Auch kann mit einem druckabhängig gesteuerten Governor-Ventil 103 anstelle eines herkömmlichen elektrischen Entlüftungssteuerventils bei voller Steuerfähigkeit aller Betriebsarten ein erheblich kostengünstigeres Ventil als Entlüftungssteuerventil 23 eingesetzt werden.

In weiteren, nicht dargestellten Ausführungsbeispielen sind Druckluftaufbereitungseinrichtungen ähnlich Fig. 1 bis Fig. 7 vorgesehen, bei denen anstelle eines elektrisch betätigbaren Magnetventils ein druckabhängig gesteuertes Governor-Ventil vorgesehen ist.

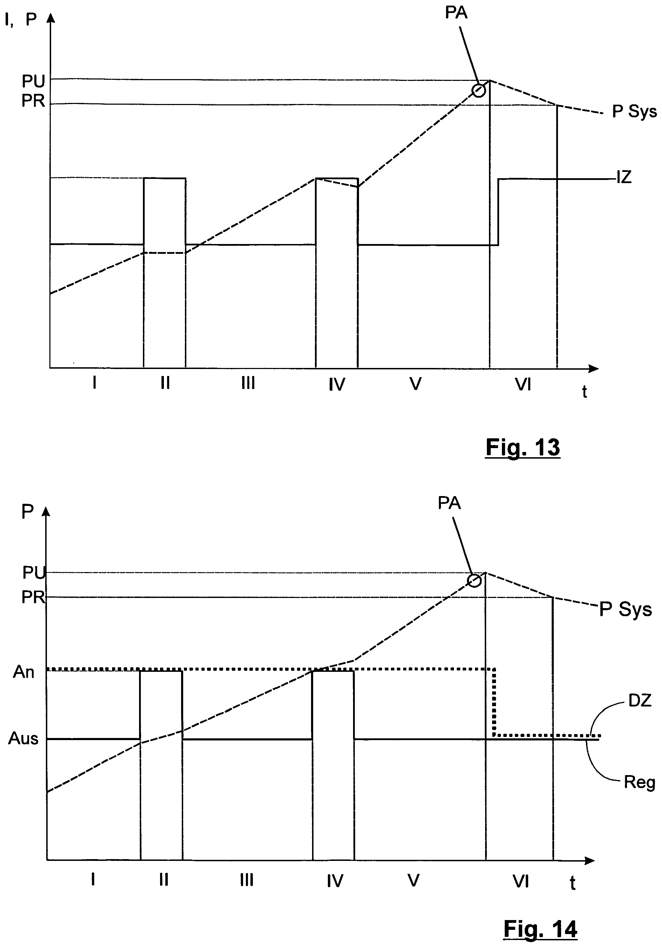

Das Betriebsverfahren der Druckluftaufbereitungseinrichtungen 100, 110 gemäß Fig. 8 und 9 wird nachstehend anhand des Schaubildes in Fig. 13 erläutert. In dem Schaubild gemäß Fig. 13 ist der zeitliche Verlauf des elektrischen Betätigungssignals IZ für das Zufuhrsteuerventil 17 als Volllinie und der zeitliche Verlauf des Systemdrucks P SYS des Systemdrucks in der Systemdruckleitung 5 als gestrichelte Kurve dargestellt.

In einem ersten Zeitintervall I (Fig. 13) befindet sich die Druckluftaufbereitungseinrichtung in einem Förderbetrieb, bei dem die vom Kompressor 2 zugeführte Druckluft über die Druckleitung 3 in die Systemdruckleitung 5 gefördert wird, wo sie für die Druckluftverbraucherkreise zur Verfügung steht. Dabei wird die Druckluft über die in der Druckleitung 3 angeordnete Trocknungseinrichtung 11 geführt. In dem Förderbetrieb gemäß Intervall I wird dem Zufuhrsteuerventil 17 kein elektrisches Betätigungssignal IZ zugeführt, so dass der Kompressor arbeitet und einen Druckluftstrom in die Druckleitung 3 abgibt.

Das zweite Zeitintervall II (Fig. 13) entspricht einem Leerlaufbetrieb (idle-mode), wobei dem Zufuhrsteuerventil 17 ein elektrisches Signal IZ zugeführt und dadurch der Kompressor abgeschaltet wird. Sofern keiner der angeschlossenen Verbraucherkreise Druckluft benötigt, bleibt der Systemdruck P SYS auf konstantem Niveau, wie es im zweiten Zeitintervall II dargestellt ist. Sobald der Betätigungsstrom IZ für das Zufuhrsteuerventil wieder abgeschaltet wird, wechselt die Druckluftaufbereitungseinrichtung wieder in den Förderbetrieb. Dabei steigt der Systemdruck P SYS weiter an, wie im dritten Zeitintervall III dargestellt ist. Für das vierte Zeitintervall IV wechselt die Druckluftaufbereitungseinrichtung wieder in den Leerlaufbetrieb, wobei in der beispielhaft dargestellten Situation einer oder mehrere Druckluftverbraucherkreise Druckluft benötigen und daher der Systemdruck P SYS fällt.

Der Förderbetrieb und der Leerlaufbetrieb sind Unterbetriebarten eines Normalbetriebs der Druckluftaufbereitungseinrichtung, welcher bei entsprechender Anforderung von Phasen mit Regenerationsbetrieb unterbrochen wird. Die Steuerung des Normalbetriebs, das heißt der Wechsel zwischen Förderbetrieb und Leerlaufbetrieb durch Ein- und Abschaltung der Druckluftzufuhr wird bevorzugt von der Fahrsituation eines mit der Druckluftaufbereitungseinrichtung ausgestatteten Fahrzeugs abhängig gemacht. Dabei ist ein Förderbetrieb mit Druckluftförderung, d.h. eine Einschaltung des Kompressors bevorzugt dann vorgesehen, wenn sich das Fahrzeug in einer Schubphase ohne Lastbetrieb befindet, bspw. auf eine rot geschaltete Ampel zufährt. In solchen Schubbetriebphasen kann die Energie des fahrenden Fahrzeugs für den Betrieb des Kompressors genutzt werden und Druckluft durch Energierückgewinnung aus kinetischer Energie des Fahrzeugs (Rekuperation) ohne Einsatz von Kraftstoff bereitgestellt werden.

In Betriebsphasen des Fahrzeugs mit hoher Last ist vorgesehen, den Kompressor möglichst abzuschalten und die Druckluftaufbereitungseinrichtung im Leerlaufbetrieb zu betreiben (Zeitintervalle II, IV), da in diesen Betriebsphasen für die Druckluftzufuhr ein unverhältnismäßig hoher Energieaufwand im Vergleich zu den Schubbetriebsphasen erforderlich ist. Das Entlüftungsventil 15 und damit die Entlüftungsleitung 14 wird in den Betriebsphasen mit Abschaltung des Kompressors ohne gleichzeitige Regeneration geschlossen gehalten, so dass der Druck in der Druckleitung 3 und der Trocknungseinrichtung 11 nahezu konstant bleibt. Bei Wiedereinschalten des Kompressors 2 wird dadurch fast unmittelbar wieder der Systemdruck, der zu diesem Zeitpunkt in der Systemdruckleitung 5 herrscht, erreicht und Druckluft in die Systemdruckleitung 5 gefördert.

In dem grafischen Verlauf gemäß Fig. 13 liegt gemäß den vorstehenden Ausführungen in dem fünften Zeitintervall V wieder eine Schubbetriebsphase des Fahrzeugs und entsprechend Förderbetrieb vor, wobei der Systemdruck P SYS durch die weitere Druckluftzufuhr des Kompressors ansteigt. Sobald aber der Systemdruck P SYS den Umschaltdruck PU des Governor-Ventils 103 (Fig. 8, 9) erreicht, wechselt das Governor-Ventil 103 seine Schaltstellung und gibt den Regenerationspfad 22 frei. Dadurch wird in den Regenerationsbetriebsmodus der Druckluftaufbereitungseinrichtung gewechselt, wobei das Governor-Ventil 103 durch Betätigen des Entlüftungsventils 15 auch die Entlüftungsleitung 14 freigibt. Im Regenerationsbetrieb, der im Schaubild gemäß Fig. 13 als sechstes Zeitintervall VI dargestellt ist, strömt Druckluft aus der Systemdruckleitung 5 durch den Regenerationspfad 22 und die Trocknungseinrichtung 11 letztlich durch die Entlüftungsleitung 14 ab, wodurch der Systemdruck P SYS in der Systemdruckleitung 5 vorübergehend sinkt. Sobald eine Steuereinheit das Umschalten des Governor-Ventils und die damit bewirkte Öffnung des Regenerationspfades in noch zu beschreibender Weise erkennt, wird im dem Zufuhrsteuerventil 17 das elektrische Betätigungssignal IZ zugeführt. Das Zufuhrsteuerventil 17 schaltet entsprechend den Kompressor 2 und damit die weitere Druckluftzufuhr ab, so dass die Energieaufnahme des Kompressors im sechsten Zeitintervall VI minimiert wird.

Im Normalbetrieb kann daher die Druckluftaufbereitungseinrichtung unter intelligenter Ausnutzung der Schubbetriebsphasen durch Ein- und Ausschalten der Druckluftzufuhr betrieben werden. Dabei wird einer Steuereinheit, welche das Betätigungssignal IZ für das Zufuhrsteuerventil erzeugt, ein geeignetes Druckband vorgegeben. Dabei wird ein Abschaltwert PA für den Systemdruck vorgegeben, bei dessen Erreichen die Druckluftzufuhr unterbrochen wird, sofern keine Regeneration gewünscht ist. Der Abschaltdruck PA ist niedriger als der Umschaltdruck PU des als Governor-Ventil 103 ausgebildeten Entlüftungssteuerventils. Der Abschaltdruck PA liegt bevorzugt innerhalb des Druckfensters, welches durch den Umschaltdruck PU und den Rückschaltdruck PR des Governor-Ventils 103 bestimmt ist. Dadurch wird sichergestellt, dass bei Annäherung des Systemsdrucks an den Umschaltdruck eine weitere Druckerhöhung und damit ein Umschalten des Governor-Ventils 103 unterbunden werden. Außerdem steht ein möglichst großes Druckband für die Drucksteuerung im Förderbetrieb zur Verfügung. Liegt bspw. der Umschaltdruck PU des Governor-Ventils bei 12,5 bar, kann das Druckband für den Förderbetrieb bei etwa 8 bis 12,3 bar liegen.

Eine gezielte Einleitung des Regenerationsbetriebs ist jederzeit möglich, indem die Druckluftzufuhr solange aufrechterhalten wird, bis der Systemdruck P SYS den Umschaltdruck PU überschreitet und das Governor-Ventil öffnet und den Regenerationsbetrieb einleitet. Zur Einleitung des Regenerationsbetriebs bildet das Zufuhrsteuerventil einen Schalter, welcher von einer Steuereinheit genutzt wird, wenn aufgrund eingehender Messwerte und entsprechender Auswertung eine Regeneration der Trocknungseinrichtung 11 gewünscht ist. Auf diese Weise ist bei jedem möglichen Druckniveau in der Systemdruckleitung eine Regeneration der Trocknungseinrichtung möglich, indem der Systemdruck P SYS durch gezielte Aufrechterhaltung der Druckluftzufuhr über den Umschaltdruck des Governor-Ventils angehoben wird.

Im Regenerationsbetrieb der Druckluftaufbereitungseinrichtung veranlasst die Steuereinheit die Abschaltung des Kompressors und damit der Druckluftzufuhr, sobald der Systemdruck P SYS dem Umschaltdruck des Governor-Ventils 103 überschreitet. Dabei wird der Schaltzustand des Governor-Ventils 103 ausgewertet und bei Erkennen eines Wechsels des Schaltzustands aufgrund Überschreitens des Umschaltdrucks PU die Druckluftzufuhr unterbrochen. Den Schaltzustand des als Governor-Ventil 103 ausgebildeten Entlüftungssteuerventils erkennt die Steuereinheit 122 aus laufenden Messungen eines den Systemdruck (P SYS) repräsentierenden Druckwertes. Zur Erfassung des Systemdrucks P SYS oder eines den Systemdruck repräsentierenden Druck in einem der Druckluftverbraucherkreise sind anhand von Fig. 10 noch näher erläuterte Drucksensoren vorgesehen, welche signalübertragend mit der Steuereinheit verbunden sind. Alternativ kann ein elektrischer Sensor verbaut werden.

Zur Einleitung des Abblasebetriebs (cold mode) wird entsprechend der Vorgehensweise im Regenerationsbetrieb der Systemdruck P SYS durch weitere Druckluftzufuhr soweit angehoben, dass das Governor-Ventil 103 die Schaltstellung wechselt und damit die Entlüftungsleitung 14 durch Betätigen des Entlüftungsventils 15 freigibt. Im Unterschied zum Regenerationsbetrieb wird im Abblasebetrieb der Kompressor 2 nicht abgeschaltet, so dass warme Luft vom Kompressor 2 durch die Entlüftungsleitung geschickt wird und Vereisung vorgebeugt wird. Um das Vorliegen einer Vereisungsgefahr festzustellen, können der Steuereinheit geeignete Temperaturmessfühler zugeordnet sein.

Bei Vorliegen vorgegebener Betriebszustände des Fahrzeugs wird einem Fahrer das Bedürfnis einer manuell eingeleiteten Regeneration angezeigt, beispielsweise durch eine im Führerhaus eines Fahrzeuges dafür vorgesehene Signallampe.

Ein solcher Betriebszustand für eine manuell eingeleitete Regeneration liegt insbesondere im Stillstand des Fahrzeugs vor, wenn in kalter Umgebung besondere Vereisungsgefahr für die Feuchtigkeit in der Trocknungseinrichtung besteht. Ist eine Vereisungsgefahr gegeben, so wird dem Fahrer bei Abstellen des Fahrzeuges und Ausschalten der Zündung ein Signal geben, welches den Bedarf einer manuell eingeleiteten Regeneration anzeigt. Die Anforderung einer Regeneration im Stand bei laufendem Motor durch den Fahrer kann durch einen separaten Taster oder durch die Kombination existierender Eingabemedien wie Gaspedal, Kupplung und Bremse erfolgen. Wird eine manuelle Regenerationsanforderung erkannt, so wird das Zufuhrsteuerventil 17 in seine erste Schaltstellung gebracht, dadurch der Kompressor zugeschaltet und die Druckluftzufuhr aufrechterhalten, bis der Umschaltdruck PU erreicht ist. In einer bevorzugten Ausführung wird bei manueller Regenerationsanforderung im Stand des Fahrzeugs gleichzeitig über eine Datenkommunikation eine höhere Drehzahl des Motors, der den Kompressor antreibt, angefordert, bis der Umschaltdruck des Governor-Ventils erreicht ist.

Der Umschaltdruck PU und der Rückschaltdruck PR bestimmen die Phase, in der das Governor-Ventil 103 den Regenerationspfad 22 freigibt. Der Umschaltdruck PU und der Rückschaltdruck PR sind dabei über eine Ventilfeder des Governor-Ventils 103 einstellbar und werden so gewählt, dass ein gewünschtes Luftvolumen durch den Regenerationspfad 22 strömt. Die Einstellung des Governor-Ventils 103 wird so vorgenommen, dass das Luftvolumen die in der Trocknungseinrichtung aufgenommene Feuchtigkeitsmenge aufnimmt. Die Steuereinheit erfasst die von der Trocknungseinrichtung aufgenommene Feuchtigkeitsmenge und fordert den Regenerationsbetrieb dann an, wenn die aufgenommene Feuchtigkeitsmenge dem regenerierbaren Luftvolumen entspricht. Zur Erfassung der Feuchtigkeit in der Trocknungseinrichtung ist im Ausführungsbeispiel ein Feuchtigkeitssensor vorgesehen. Alternativ wird die Feuchtigkeitmenge über das geförderte Luftvolumen abgeschätzt.

Bei der Auswertung der aufgenommenen Feuchtigkeitsmenge zur Anforderung des Regenerationsbetrieb durch Anhebung des Systemdrucks berücksichtigt die Steuereinheit durch entsprechende Programmierung bevorzugt eine Prognose der zusätzlichen Feuchtigkeitsmenge, die bis zum Erreichen des Umschaltdrucks PU mit der weiterhin durch die Trocknungseinrichtung strömenden Luft eingebracht wird. Zur genauen Bestimmung eines Zeitfensters bis zum Erreichen des Umschaltdrucks und der Prognose der bis dahin noch eingebrachten Feuchtigkeitsmenge kann der aktuelle oder durchschnittliche Druckluftverbrauch des Fahrzeugs über die Zeit berücksichtigt werden.

Des Weiteren erfasst eine Steuereinheit (Fig. 10) den Druckverlauf während des Regenerationsbetriebs im Zeitintervall zwischen Umschalten und Rückschalten des Entlüftungssteuerventils 23 und berechnet daraus das rückgeströmte Luftvolumen. Wird erkannt, dass das rückgeströmte Volumen nicht für eine vollständige Regeneration ausgereicht hat, so kann die errechnete verbleibende Feuchtigkeitsmenge bei der Bestimmung des Zeitpunkts für die nächste Regeneration berücksichtigt werden. Dadurch wird während der Regeneration die tatsächlich zur Regeneration eingesetzte Luftmenge gemessen, um gegebenenfalls zu geringe Regeneration in nachfolgenden Regenerationsphasen auszugleichen.

In Fig. 10 ist ein Druckluftversorgungssystem 120 für ein Fahrzeug dargestellt, welches einen Kompressor 2, eine Druckluftaufbereitungseinrichtung 121, ein Mehrkreisschutzventil 6 und eine elektronische Steuereinheit 122 zur Erzeugung elektrischer Ventilsteuersignale aufweist.

Der Kompressor 2 ist mit einem Drucklufteingang 126-1E eines Aufbereitungsmoduls 126 verbunden, die Teil der Druckluftaufbereitungseinrichtung 121 ist. An die Druckluftaufbereitungseinrichtung 121 ist ein Mehrkreisschutzventil 6 angeschlossen, welches vier Druckluftverbraucherkreise versorgt. Als Druckluftverbraucherkreise sind im vorliegenden Ausführungsbeispiel zwei Betriebsbremskreise 7, 8 des Fahrzeuges, ein Anhängerdruckkreis 9 und ein zusätzlicher Verbraucherdruckreis 10 zum Anschluss eines beliebigen pneumatischen Verbrauchers vorgesehen. In jedem der Druckluftverbraucherkreise 7, 8, 9 ,10 ist ein Überströmventil 124, 124a, 124b, 124c vorgesehen, wobei der Druckluftverbraucherkreis 9 für den Anhänger zusätzlich mit einem Druckbegrenzungsventil 125 ausgestattet ist.

Die Druckluftaufbereitungseinrichtung 121, das Mehrkreisschutzventil 6 und die Steuereinheit 122 sind als modulare Baugruppen ausgebildet, wie nachstehend näher beschrieben ist.

Die Druckluftaufbereitungseinrichtung 121 ist mit Ausnahme eines Zufuhrsteuerventils 127 in einem Aufbereitungsmodul 126 angeordnet. Das Aufbereitungsmodul 126 ist eine modulare Baugruppe, welches die pneumatischen Elemente der Druckluftaufbereitungseinrichtung aufweist, deren elektrisches Zufuhrsteuerventil außerhalb des Aufbereitungsmoduls 126 angeordnet ist. Das Aufbereitungsmodul 126 kann bezüglich der Verschaltung der pneumatischen Elemente einem der Ausführungsbeispiele von Druckluftaufbereitungseinrichtung gemäß Fig. 1 bis Fig. 9 entsprechen, wobei das dort jeweils vorgesehene elektrische Zufuhrsteuerventil außerhalb des Aufbereitungsmoduls angeordnet ist. Bei Ausführungsbeispielen mit elektrisch betätigten Entlüftungssteuerventilen wäre in einer entsprechenden Anordnung in einem Aufbereitungsmodul das Entlüftungssteuerventil als pneumatisch betätigtes Governor-Ventil ausgebildet.

An einen Drucklufteingang 126-1E des Aufbereitungsmoduls 126 ist im gezeigten Einbauzustand des Aufbereitungsmoduls 126 der Kompressor 2 des Druckluftversorgungssystems angeschlossen. Mit dem Drucklufteingang 126-1E ist eine Druckleitung 126-3 des Aufbereitungsmoduls 126 verbunden. Eine Systemdruckleitung 126-5 ist über ein Rückschlagventil 126-4 an die Druckleitung 126-3 angeschlossen und führt zu einem Druckluftausgang 126-1A des Aufbereitungsmoduls 126. In der Druckleitung 126-3 ist eine Trocknungseinrichtung 126-11 angeordnet, wobei zwischen dem Drucklufteingang 126-1E und der Trocknungseinrichtung 126-11 eine Entlüftungsleitung 126-14 aus der Druckleitung 126-3 abzweigt. In der Entlüftungsleitung 126-14 ist ein pneumatisch betätigbares Entlüftungsventil 126-15 angeordnet. Aus der Systemdruckleitung 126-5 zweigt ein Regenerationspfad 126-22 ab, welcher zwischen der Trocknungseinrichtung 126-11 und dem Rückschlagventil 126-4 in die Druckleitung 126-3 einmündet. Ein Entlüftungssteuerventil im Regenerationspfad 126-22 ist als pneumatisch betätigbares Governor-Ventil 126-103 ausgebildet, welches ständig vom Systemdruck in der Systemdruckleitung 126-5 steuerbar ist.

Ein Steuereingang 126-25 des Entlüftungsventils 126-15 ist mit einer Regenerationsdruckleitung 126-101 verbunden, welche den von dem Governor-Ventil 126-103 kontrollierten Abschnitt des Regenerationspfads 126-22 zwischen dem Governor-Ventil 126-103 und der Druckleitung 126-3 bildet. In der Regenerationsdruckleitung sind ferner ein Rückschlagventil 126-28 und eine Blende 126-102 angeordnet.

An den Druckluftausgang 126-1A des Aufbereitungsmoduls 126 ist das Mehrkreisschutzventil 6 angeschlossen. Die Verbindung zwischen dem Druckluftausgang 126-1A und dem Mehrkreisschutzventil 6 ist Teil der Systemdruckleitung 5 der Druckluftaufbereitungseinrichtung. Die Verbindung kann durch eine Leitung, Kanäle oder auch Steckverbindungen gebildet sein.

Das außerhalb des Aufbereitungsmoduls 126 angeordnete, elektrisch betätigbare Zufuhrsteuerventil 127 entspricht in seiner Funktion und seinen Anschlüssen dem Zufuhrsteuerventil 17 der Ausführungsbeispiele der Fig. 1 bis Fig. 9. Im vorliegenden Ausführungsbeispiel ist das Zufuhrsteuerventil 127 dem Kompressor 2 zugeordnet. Es ist daher nur eine kurze Kompressorsteuerleitung 128 und ein Kabel 129 zur Übertragung des elektrischen Betätigungsstroms von der Steuereinheit 122 zum Betrieb des Zufuhrsteuerventils 127 erforderlich. Das elektrisch betätigbare Zufuhrsteuerventil 127 ist auch in diesem Ausführungsbeispiel ein 3/2-Wege-Magnetventil. Der Versorgungsanschluss 130 des Zufuhrsteuerventils 127 ist im vorliegenden Ausführungsbeispiel an die Systemdruckleitung 5 gekoppelt, so dass bei einer Betätigung des Zufuhrsteuerventils 127 durch die Steuereinheit 122 der Systemdruck aus der Systemdruckleitung 5 über die Kompressorsteuerleitung 128 zum Kompressor 2 durchgeschaltet wird und die Druckluftzufuhr unterbunden wird. In einem nicht gezeigten Ausführungsbeispiel ist der Versorgungsanschluss 130 an einen der Druckluftverbraucherkreise angeschlossen, und zwar an einen solchen Druckluftverbraucherkreis, welcher nicht durch Anordnung eines Druckbegrenzungsventils 125 auf einem niedrigeren Druckniveau als dem Systemdruck gehalten ist. Das Zufuhrsteuerventil 127 kann daher alternativ zur Systemdruckleitung 5 an einen der der Betriebsbremskreise 7, 8 oder einen der Druckluftverbraucherkreis 9, 10 angeschlossen sein.

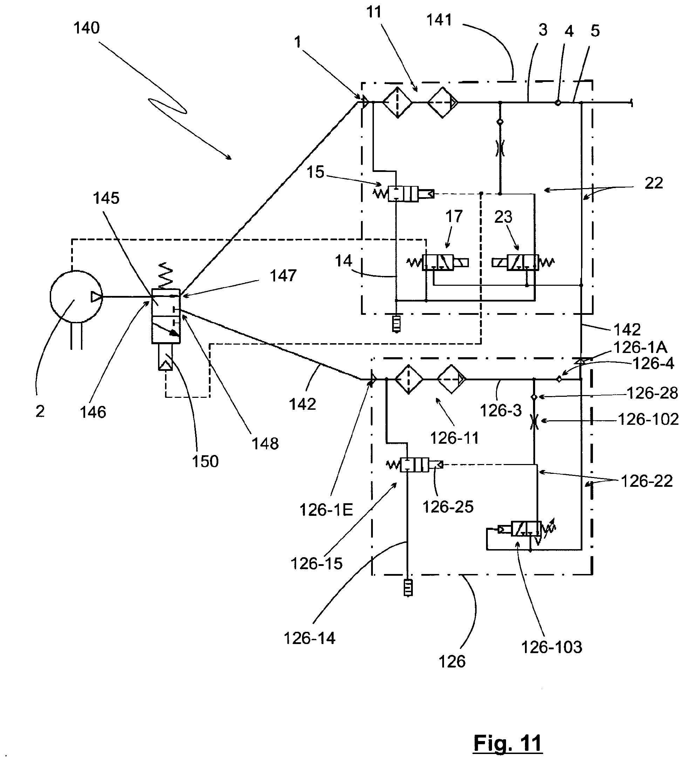

Durch die Anordnung des elektrisch betätigbaren Zufuhrsteuerventils 127 außerhalb des Aufbereitungsmoduls 126 kann das Aufbereitungsmodul 126 mit ausschließlich pneumatischen Komponenten ohne elektrische Versorgung auskommen. Es ist daher ein einfaches und kostengünstiges Bauteil, welches zudem vielseitig und gegebenenfalls redundant einsetzbar ist. Eine Möglichkeit zur redundanten Anordnung eines Aufbereitungsmoduls ist später anhand von Fig. 11 beschrieben. Auch ist die Nachrüstung eines rein pneumatischen Druckluftversorgungssystems in einem existierenden Fahrzeug mit einem externen Zufuhrsteuerventil 127 und einem Steuermodul 131 möglich, um nachträglich die Energieeffizienz der Anlage zu steigern. Auch das Mehrkreisschutzventil 6 ist im gezeigten Ausführungsbeispiel ein rein pneumatisches Bauteil ohne elektrische Sensoren und elektrische Ventile.

Das Steuermodul 131 ist eine kompakte Baugruppe, welche eine Steuereinheit 122 umfasst. Der Steuereinheit 122 ist ein Signalausgang 134 zugeordnet, über den die Steuereinheit 122 elektrische Steuersignale abgegeben kann. An den Signalausgang 134 ist das elektrische Zufuhrsteuerventil 127 angeschlossen. Das Steuermodul 131 steuert somit die pneumatischen Baugruppen des Aufbereitungsmoduls 126 und des Mehrkreisschutzventils 6 allein über das Zufuhrsteuerventil 127. Die Steuerung über das Zufuhrsteuerventil 127 erfolgt dabei entsprechend dem oben anhand von Fig. 8 und Fig. 9 beschriebenen Betriebsverfahren. Hierzu ist das Steuermodul derart ausgebildet, dass über die Ein- und Abschaltung der Druckluftzufuhr mittels des Zufuhrsteuerventils 127 der gewünschte Betriebsmodus der Druckluftaufbereitungseinrichtung, insbesondere der Förderbetrieb, der Leerlaufbetrieb und der Regenerationsbetrieb, steuerbar sind. Die Steuerung der Betriebsmodi erfolgt dabei unter Berücksichtigung des Systemdrucks, welcher in nachstehend noch näher beschriebener Weise mittels Drucksensoren erfassbar ist. Der Signalausgang 134 ist im gezeigten Ausführungsbeispiel im Bereich einer Außenseite des Steuermoduls angeordnet und ist über eine Signalleitung mit der Steuereinheit im Inneren des Steuermoduls verbunden. Der Signalausgang 134 ist dadurch von außen am Steuermodul 131 zugänglich und ermöglicht die leichte Installation eines externen Zufuhrsteuerventils. Der Signalausgang 134 kann auch an der Steuereinheit 122 angeordnet sein, wobei eine interne Signalleitung zwischen dem Signalausgang 134 und der Steuereinheit entfällt bzw. sehr kurz ist.

In einem nicht dargestellten Ausführungsbeispiel ist das elektrisch betätigbare Zufuhrsteuerventil 127 in dem Steuermodul 131 untergebracht, welche die elektronische Steuereinheit 122 enthält. Das Zufuhrsteuerventil ist dabei innerhalb des Steuermoduls 131 an die Steuereinheit 122 über eine interne Signalleitung, also eine innerhalb des Steuermoduls 131 angeordnete Signalleitung, angeschlossen. In der Ausführungsform mit innerhalb des Steuermoduls 131 angeordnetem Zufuhrsteuerventil 127 ist ein von außen zugänglicher Anschluss des Steuermoduls 131 für eine Verbindung der Kompressorsteuerleitung mit dem Zufuhrsteuerventil 127 vorgesehen. Bei einer Anordnung des Zufuhrsteuerventils in dem Steuermodul 131 ist von den drei modularen Baugruppen des Druckluftversorgungssystems 120 nur das Steuermodul 131 mit elektrischer Versorgung auszustatten. Dabei kann das Steuermodul 131 mit dem Zufuhrsteuerventil 127 oder auch ein das Zufuhrsteuerventil steuernder Teil der Steuereinheit baulich nahe dem Kompressor angeordnet werden. In einem weiteren nicht dargestellten Ausführungsbeispiel ist das elektrisch betätigbare Zufuhrsteuerventil 127 in der Baugruppe des Mehrkreisschutzventils untergebracht.

Der Systemdruck wird wie bereits oben beschrieben der Steuerung des Druckluftversorgungssystems derart zugrundegelegt, dass über die Ein- und Ausschaltung der Druckluftzufuhr ein Förderbetrieb, ein Regenerationsbetrieb und ein Abblasebetrieb kontrolliert werden kann. Die Baugruppe des Mehrkreisschutzventils 6 und das Steuermodul 131 sind unabhängig von der Druckluftaufbereitungseinrichtung zusammengefasst, so dass ein Aufbereitungsmodul leicht ausgetauscht werden kann.

Das Steuermodul 131, welches die Steuereinheit 122 enthält, ist auf die Baugruppe des Mehrkreisschutzventils 6 aufsetzbar und weist durchgehende Leitungsabschnitte der Druckluftverbraucherkreise auf. Die jeweiligen Einrichtungen der Druckluftverbraucherkreise werden an das Steuermodul 131 angeschlossen.

In jedem der Leitungsabschnitte der Druckluftverbraucherkreise 7, 8, 9, 10 ist ein Drucksensor 132, 132a, 132b, 132c angeordnet, welcher jeweils mit der Steuereinheit 122 verbunden ist. Für die Steuerung der Druckluftzufuhr zieht die Steuereinheit 122 den Messwert des Drucksensors 132 im Betriebsbremskreis 6 heran. Die Drucksensoren in den anderen Druckluftverbraucherkreisen werden für die Steuerung anderer Systeme des Fahrzeugs herangezogen und sind daher in der Zeichnungsfigur mit punktierten Linien dargestellt. Es kann aber vorteilhaft sein, zur Verfeinerung der Steuerung zusätzlich zum Drucksensor 132 im Betriebsbremskreis 7 für die Steuerung der Druckluftzufuhr zusätzliche Messwerte aus den Druckluftverbraucherkreisen heranzuziehen, welche kein Druckbegrenzungsventil aufweisen. Hierzu werden die Messwerte des Drucksensors 132a in dem Betriebsbremskreis 8 oder der Drucksensors 132c in im zusätzlichen Druckluftverbraucherkreis 10 für die Steuerung der Druckluftzufuhr berücksichtigt.

Zur Steuerung des Druckluftversorgungssystems 120 und auch gegebenenfalls weiterer Systeme werden der Steuereinheit 122 Signale eines oder mehrerer Kommunikationsbusse 133 wie beispielsweise CAN oder FlexRay zugeführt, welche Informationen über das dynamische Verhalten des Fahrzeugs, wie Motordrehzahl, Geschwindigkeit und Pedalstellungen des Fahrzeugs liefern. Dabei können in der Software der Steuereinheit 122 Steuerverfahren für Systeme wie Motorsteuerung, Antiblockiersystem (ABS), elektronische Bremsregelung (EBS) oder Schlupfregelungen, elektronische Parkhilfesysteme (EPH) und Luftfederung (ECAS) berücksichtigt werden. In dem Steuermodul 131 können auch zusätzliche Steuerventile und Drucksensoren, die für Assistenzsysteme wie die elektronische Parkhilfe (EPH) eingesetzt werden sollen, integriert werden.

In einem nicht dargestellten Ausführungsbeispiel ist der Entlüftungsanschluss des Zufuhrsteuerventils 127 ähnlich dem Ausführungsbeispiel nach Fig. 9 an den vom Governor-Ventil 103 kontrollierten Abschnitt des Regenerationspfads 22 geknüpft. Dadurch kann bei unbetätigtem Zufuhrsteuerventil 127 - oder bei Stromausfall - der Kompressor über das Governor-Ventil 103 abgeschaltet werden.

Fig. 11 zeigt einen Teil eines Druckluftversorgungssystems mit einer Druckluftaufbereitungseinrichtung 140, welche ein Hauptmodul 141 umfasst, dessen Gestaltung dem grundsätzlichen Aufbau der Ausführungsbeispiele gemäß Fig. 1 bis 7 folgt. Das Zufuhrsteuerventil 17 und das Entlüftungssteuerventil 23 sind dabei jeweils elektrisch betätigbare Magnetventile. Das Hauptmodul 141 kann jedem der Ausführungsbeispiele von Druckluftaufbereitungseinrichtungen nach Fig. 1 bis 7 entsprechen.

Das Hauptmodul 141 umfasst einen Drucklufteingang 1, an den ein Kompressor 2 anschließbar ist, und eine mit dem Drucklufteingang 1 verbundene Druckleitung 3. An die Druckleitung 3 ist eine Systemdruckleitung 5 über ein Rückschlagventil 4 angeschlossen. In der Druckleitung 3 ist eine Trocknungseinrichtung 11 angeordnet. Zwischen dem Drucklufteingang 1 und der Trocknungseinrichtung 11 zweigt aus der Druckleitung 3 eine Entlüftungsleitung 14 ab, in der ein pneumatisch betätigbares Entlüftungsventil 15 angeordnet ist. Ein Regenerationspfad 22 des Hauptmoduls 141 ist durch das Entlüftungssteuerventil 23 mit der Systemdruckleitung 5 verbindbar. Das elektrisch betätigbare Zufuhrsteuerventil 17 ist zur Steuerung der Druckluftzufuhr zwischen einer Kompressorsteuerleitung 21 zum Kompressor 2 und der Systemdruckleitung 5 angeordnet.

In einer parallel zur Druckleitung 3 liegenden Paralleldruckleitung 142 ist ein Aufbereitungsmodul 126 mit einer Trocknungseinrichtung 126-11 vorgesehen. Die Paralleldruckleitung 142 ist alternativ zur Druckleitung von einem pneumatisch steuerbaren Wechselventil 145 freigebbar. Das Wechselventil 145 ist ein pneumatisch betätigtes 3/2-Wege-Ventil, an dessen Versorgungsanschluss 146 der Kompressor 2 angeschlossen ist. An die Ausgangsanschlüsse 147, 148 des Wechselventils 145 sind der Drucklufteingang 1 und ein Drucklufteingang 149 des Aufbereitungsmoduls 126 angeschlossen. Der pneumatische Steuereingang 150 des Wechselventils 145 ist an die Betätigung des Entlüftungsventils 15 des Hauptmoduls 141 geknüpft.

Sobald das Entlüftungssteuerventil 23 des Hauptmoduls 141 im Regenerationsbetrieb den Regenerationspfad 22 und damit gleichzeitig über das Entlüftungsventil 15 die Entlüftungsleitung 14 freigibt, wechselt das Wechselventil 145 die Schaltstellung und leitet die Druckluft des Kompressors 2 durch das Aufbereitungsmodul 126. Auf diese Weise kann auch in Betriebsphasen, in denen die Trocknungseinrichtung 11 regeneriert werden muss, gleichwohl eine Druckluftaufbereitung über das Aufbereitungsmodul 126 aufrechterhalten werden.

Das Aufbereitungsmodul 126 entspricht in seinem Aufbau dem Aufbereitungsmodul 126 gemäß Fig. 10. Es enthält als Steuerglied für die Regeneration seiner Trocknungseinrichtung 126-11 ein druckabhängig gesteuertes Governor-Ventil 126-103. Das Governor-Ventil 126-103 ist in einem Regenerationspfad 126-22 des Aufbereitungsmoduls 126 angeordnet. Der Regenerationspfad 126-22 umgeht ein Rückschlagventil 126-4, welches analog zu dem oben beschriebenen Grundaufbau des Hauptmoduls 141 in der Paralleldruckleitung 142 eine Systemdruck führende Systemdruckleitung 126-5 von der Druckleitung 126-3 mit der Trocknungseinrichtung 126-11 trennt. Zwischen dem Drucklufteingang 126-1E des Aufbereitungsmoduls 126 und der Trocknungseinrichtung 126-11 zweigt eine Entlüftungsleitung 126-14 ab. In der Entlüftungsleitung 126-14 des Aufbereitungsmoduls 126 ist ein druckabhängig gesteuertes Entlüftungsventil 126-15 angeordnet, welches von dem Governor-Ventil 126-103 pneumatisch geschaltet wird. Die Entlüftungsleitung 126-14 des Aufbereitungsmoduls 126 kann mit der Entlüftungsleitung 14 des Hauptmoduls 141 kombiniert und einer gemeinsamen Entlüftung zugeführt sein.

Durch das Hauptmodul 141 und das Aufbereitungsmodul 126 verfügt die Druckluftaufbereitungseinrichtung 140 über zwei Trocknungskammern, so dass auch bei einer Regeneration einer der Trocknungseinrichtungen praktisch stets die Druckluftförderung aufrecht gehalten werden kann. Dabei sind für das Aufbereitungsmodul keine elektrischen Bauteile erforderlich, so dass das Aufbereitungsmodul kostengünstig und einfach gefertigt werden kann.

Das Aufbereitungsmodul 126 kann auch mit geringem Aufwand nachgerüstet werden, indem in einem bestehenden Druckluftversorgungssystem ein Druckanschluss für das Aufbereitungsmodul in der Systemdruckleitung angebracht wird. Dies kann in einem modularen System im Bereich der Verbindung von Aufbereitungsmodul und Mehrkreisschutzventil erfolgen.

Der Betrieb der Druckluftaufbereitungseinrichtung gemäß Fig. 11 mit einem pneumatisch arbeitenden Aufbereitungsmodul wird in der grafischen Darstellung der Fig. 14 verdeutlicht. In der grafischen Darstellung entspricht der Verlauf der vollen Linie dem Aktivierungszustand Reg der Regeneration durch Ansteuerung des Entlüftungssteuerventils. Die gepunktete Linie repräsentiert den Aktivierungszustand DZ der Druckluftzufuhr zwischen den Zustanden "An" und "Aus". Der Aktivierungszustand der Druckluftzufuhr ist über das elektrisch betätigbare Zufuhrsteuerventil beeinflussbar. Im Zustand DZ=An ist das Zufuhrsteuerventil nicht aktiviert, das heißt, es wird Druckluft zugeführt. Die gestrichelte Linie entspricht dem zeitlichen Verlauf des Systemsdrucks P SYS in der Systemdruckleitung.

Das erste Zeitintervall I (Fig. 14) entspricht einem Förderbetrieb, wobei der Aktivierungszustand DZ für die Druckluftzufuhr "An" ist und der Aktivierungszustand Reg für die Regeneration der Trocknungseinrichtung im Hauptmodul "Aus" ist. Dabei wird bei eingeschaltetem Kompressor und abgetrenntem Regenerationspfad der Systemdruck P SYS durch die stetige Druckluftzufuhr angehoben. Im zweiten Intervall II wird die Trocknungseinrichtung durch Aktivieren des Regenerationspfades des Hauptmoduls (Ansteuerung des Entlüftungssteuerventils 23) regeneriert, wobei die Druckluftzufuhr eingeschaltet bleibt. Die Regenerationsdruckleitung 101 wird mit Druck beaufschlagt, wodurch das Wechselventil 145 in seine zweite Schaltstellung wechselt und die Druckluft vom Kompressor wird über die Paralleldruckleitung 142 und das dort angehängte Aufbereitungsmodul 126 zur Systemdruckleitung 5 gefördert. Dadurch kann trotz Regenerationsbetrieb im Hauptmodul gleichzeitig die Druckluftzufuhr zu den Druckluftverbraucherkreisen aufrecht gehalten werden. Aufgrund der laufenden Regenerierung der Trocknungseinrichtung des Hauptmoduls wird aus der Systemdruckleitung Regenerationsluft abgenommen wird, so dass der Anstieg des Systemsdrucks P SYS im Zeitintervall II weniger steil ist als im Zeitintervall I.

Im dritten Intervall III ist der Aktivierungszustand Reg der Regeneration auf "Aus" gestellt, so dass der eingeschaltete Kompressor rasch den Systemdruck P SYS erhöht. Diese Phase des Förderbetriebs wird von der Steuereinheit vorzugsweise in Schubphasen des Fahrzeugs mit geringer Last eingeleitet. Im vierten Zeitintervall IV wird wieder die Regeneration des Hauptmoduls der Druckluftaufbereitungseinrichtung aktiviert und der Druckluftstrom des Kompressors aufgrund der gleichzeitigen Umschaltung des Wechselventils durch die Paralleldruckleitung und das Aufbereitungsmodul geführt.

Die Steuerung der Regenerierung der Trocknungseinrichtungen in dem pneumatisch gesteuerten Aufbereitungsmodul erfolgt in ähnlicher Weise wie die Regeneration der pneumatisch gesteuerten Druckluftaufbereitungseinrichtung gemäß Fig. 8 und Fig. 9. Es wird daher auf die Beschreibung der Regenerationssteuerung anhand von Fig. 13 Bezug genommen.

Wird eine Regeneration der Trocknungseinrichtung 126-11 des Aufbereitungsmoduls 126 angefordert, so wird durch Aufrechterhaltung der Druckluftzufuhr der Systemdruck P SYS solange angehoben, bis der Umschaltdruck PU des Governor-Ventils 126-103 in dem Aufbereitungsmodul 126 erreicht ist. Solange keine Regenerierung der Trocknungseinrichtung 126-11 im Aufbereitungsmodul 126 erforderlich wird, wird die Druckluftzufuhr innerhalb eines Druckbandes gesteuert, welches durch einen Abschaltdruck PA begrenzt wird. Der Abschaltdruck PA liegt zwischen dem Umschaltdruck PU und dem Rückschaltdruck PR des Governor-Ventils 126-103. Wie bereits zu Fig. 13 beschrieben, kann bei Anforderung einer Regeneration der Trocknungseinrichtung 126-11 im Aufbereitungsmodul 126 die Regeneration gezielt eingeleitet werden, indem trotz Erreichen des Abschaltwerts PA für die Druckluftzufuhr die Druckluftzufuhr weiter aufrechterhalten wird, so dass der Systemdruck P SYS den Umschaltdruck des Governor-Ventils 126-103 im Aufbereitungsmodul 126 erreicht.

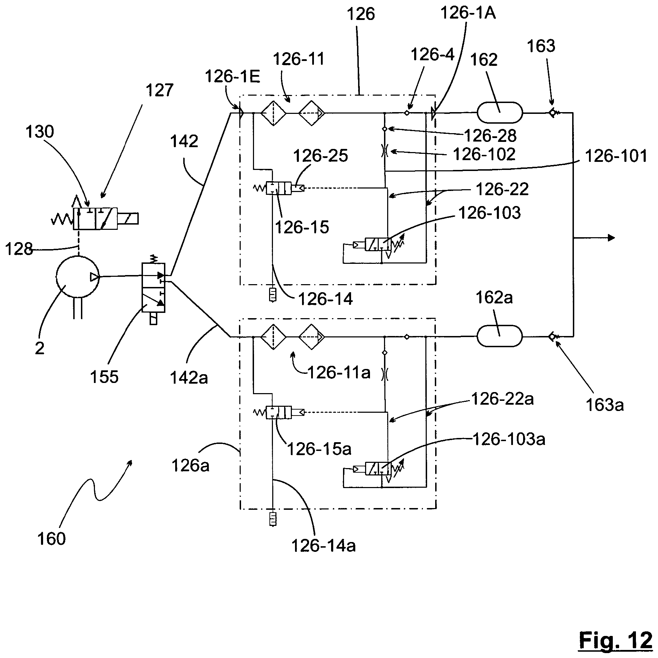

Fig. 12 zeigt eine Druckluftaufbereitungseinrichtung 160, bei der zwei parallel geschaltete pneumatische Aufbereitungsmodule 126, 126a der zu Fig. 10 und 11 bereits beschriebenen Art angeordnet sind. Jedes Aufbereitungsmodul 126, 126a weist ein druckabhängig gesteuertes Governor-Ventil 126-103, 126-103a auf, welches ein jeweils zugeordnetes Entlüftungsventil 126-15, 126-15a in der Entlüftungsleitung 126-14, 126-14a des jeweiligen Aufbereitungsmoduls 126, 126a steuern und in durchgängigem Schaltzustand die entsprechende Entlüftungsleitung 126-14, 126-14a öffnen.

Die Aufbereitungsmodule 126, 126a sind baugleich und werden von einem Wechselventil 155 alternativ aktiviert. Das Wechselventil 155 ist im gezeigten Ausführungsbeispiel ein elektrisch betätigbares 3/2-Wegeventil und verbindet in seinen Schaltstellungen jeweils eines der Aufbereitungsmodule 126, 126a mit dem Kompressor 2. Sobald das zuletzt aktive Aufbereitungsmodul in den Regenerationsbetrieb schaltet, wird durch eine nicht dargestellte Steuereinrichtung das jeweils andere Aufbereitungsmodul 126, 126a aktiviert.

Eine Steuerung der Druckluftzufuhr erfolgt über ein externes Zufuhrsteuerventil 127, welches, wie bereits zu Fig. 10 beschrieben, baulich dem Kompressor 2 oder einer nicht gezeigten elektronischen Steuereinheit zugeordnet sein kann.

In den Paralleldruckleitungen 142, 142a, welche an das Wechselventil 155 angeschlossen sind, ist jeweils ein Aufbereitungsmodul 126. 126a angeordnet. Die Trocknungseinrichtungen 126-11, 126-11a sind jeweils über einen Regenerationspfad 126-22, 126-22a mit trockener Luft entgegen einer Strömungsrichtung im Förderbetrieb versorgbar. Das Governor-Ventil 126-103, 126-103a des jeweiligen Aufbereitungsmoduls 126, 126a ist im Regenerationspfad 126-22, 126-22a angeordnet und wird vom Systemdruck gesteuert, welcher in der jeweiligen Paralleldruckleitung 142, 142a hinter einem Rückschlagventil 126-4 herrscht.

Die Regeneration der Trocknungseinrichtungen 126-11, 126-11 a der Aufbereitungsmodule 126, 126a wird jeweils aus einem separaten Regenerationsvolumen gespeist. Die Druckluftaufbereitungseinrichtung 160 weist für jedes Aufbereitungsmodul 126, 126a einen separaten Regenerationsspeicher 162, 162a auf, welche jeweils in den Systemdruck führenden Abschnitten der Paralleldruckleitungen 142, 142a zu den Druckluftverbraucherkreisen angeordnet sind. Die Druckluftverbraucherkreise sind durch jeweils ein Rückschlagventil 163, 163a in den Paralleldruckleitungen 142, 142a geschützt. Die Rückschlagventile 163, 163a sind zwischen den jeweiligen Regenerationsspeichern 162, 162a und den Verbraucherkreisen angeordnet.

Die Regeneration einer Trocknungseinrichtung 126-11, 126-11 a kann jeweils am Ende einer Förderphase durch die entsprechenden Trocknungseinrichtung 126-11, 126-11a eingeleitet werden, indem der Systemdruck P SYS über den Umschaltdruck des Governor-Ventils 126-103, 126-103a des betreffenden Aufbereitungsmoduls 126, 126a angehoben wird. Die Rückschlagventile 163, 163a verhindern dabei, dass das Governor-Ventil 126-103, 126-103a des jeweils gerade nicht aktiven Aufbereitungsmoduls 126, 126a umschaltet. Die Regeneration wird solange durchgeführt, bis das Druckniveau im jeweils aktiven Regenerationsspeicher 162, 162a unter den Rückschaltdruck des Governor-Ventils 126-103, 126-103a fällt.

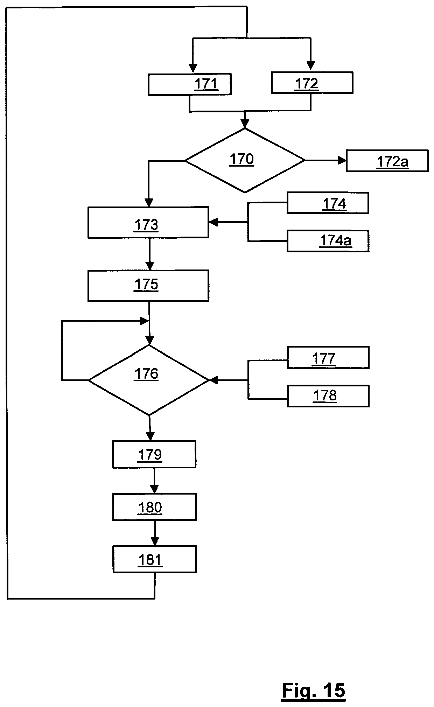

Ein mögliches Ablaufschema eines erfindungsgemäßen Verfahrens zum Betrieb einer Druckluftaufbereitungseinrichtung bzw. eines Druckluftversorgungssystems ist in Fig. 15 dargestellt.

Die Steuereinheit erfasst in einem ersten Schritt 170 zur Entscheidung, ob eine Regeneration angefordert werden soll, den Betriebszustand 171 des Fahrzeugs und die bereits in der Trocknungseinrichtung aufgenommene Feuchtigkeitsmenge 172. Die Feuchtigkeitsmenge 172 wird mit Feuchtigkeitssensoren gemessen oder anhand der geförderten Luftmenge bestimmt, welche gemessen wird oder als Schätzwert berücksichtigt wird. Die aufgenommene Feuchtigkeitsmenge 172 kann auch abgeschätzt werden. Liegen vorgegebene Betriebszustände vor, beispielsweise ein Ausschalten der Zündung, so wird eine manuelle Regeneration 172a angefordert. Dazu wird im Fahrerhaus des Fahrzeugs beispielsweise eine Signallampe aktiviert.

Liegt kein Betriebszustand für manuelle Regeneration vor, so erfolgt eine Bestimmung des Einleitungszeitpunkts 173 für den Regenerationsbetrieb, das heißt über den zu erwartenden Zeitpunkt, zu dem im Hinblick auf eine Regeneration und den dazu erforderlichen Umschaltdruck der Regenerationsbetrieb eingeleitet werden soll. Dabei zieht die Steuereinheit zur Prognose über das Zeitfenster bis zum Erreichen des Umschaltdrucks das bis dahin noch aufzunehmende Feuchtigkeitsvolumen 174 und einen durchschnittlichen Verbrauch 174a der angeschlossenen Druckluftverbraucher heran.

Sobald der Zeitpunkt kommt, zu dem mit dem erwarteten Druckanstieg und prognostizierter Feuchtigkeitsaufnahme rechtzeitig eine vollständige Regeneration erfolgen kann, erfolgt die Einleitung 175 des Regenerationsbetriebs. Dabei wird der Abschaltwert für die Druckluftzufuhr unterdrückt und bis zum Überschreiten des Umschaltdrucks weiter Druckluft gefördert.

Während des Anstiegs des Systemdrucks erfolgt eine Schaltzustanderfassung 176 des Schaltzustands des Governor-Ventils. Die Überwachung der Schaltstellung kann dabei alternativ mit einem dem Governor-Ventil zugeordneten Sensor 177 oder einer Auswertung des Druckanstiegs anhand von Messungen 178 des Systemdrucks erfolgen. Aus einem Abfallen des Systemdrucks lassen sich Rückschlüsse auf das Schalten des Governor-Ventils ziehen. Der Sensor 177 kann ein elektrischer Schalter sein, welcher mit dem Governor-Ventil die Schaltstellung wechselt. Das Signal des Sensors 177 ist von der Steuereinheit einlesbar.

Sobald das Governor-Ventil umschaltet, erfolgt eine Abschaltung der Druckluftzufuhr und entsprechende Ansteuerung des Zufuhrsteuerventils. Sobald der Schaltzustand 176 wieder bei Unterschreiten des Rückschaltdrucks wechselt und dieses Ereignis erfasst ist, erfolgt eine Ermittlung 179 der rückgeströmten Luftmenge zwischen Umschalten und Rückschalten des Governor-Ventils. Die verbleibende Feuchtigkeitsmenge 180 wird als Startfeuchtigkeitswert 181 für nachfolgende Regenerationszeitpunktbestimmungen eingesetzt. Der Startfeuchtigkeitswert 181 ersetzt somit für anschließende Berechnungsvorgänge den Wert, der bisher als in der Trocknungseinrichtung aufgenommene Feuchtigkeitsmenge 172 beim Start des Schemas berücksichtigt wurde.

Die anhand von Fig. 15 veranschaulichte Vorgehensweise beim Betrieb einer Druckluftaufbereitungseinrichtung sowie die Steuerung der Betriebsmodi der Druckluftaufbereitungseinrichtung wird von der Steuereinheit 122 (Fig. 10) kontrolliert, welche Teil einer kompakten Baugruppe sein kann (Steuermodul 133). In der Steuereinheit 122 sind entsprechende Algorithmen zur Umsetzung der beschriebenen Betriebsweise der Druckluftaufbereitungseinrichtung abgelegt bzw. programmiert.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Druckluftaufbereitungseinrichtung mit
- mindestens einem Drucklufteingang (1), an den ein Kompressor (2) anschließbar ist,
- einer mit dem Drucklufteingang (1) verbundenen Druckleitung (3),
- einer Systemdruckleitung (5), welche über ein Rückschlagventil (4) an die Druckleitung (3) angeschlossen ist,
- einer in der Druckleitung (3) angeordneten Trocknungseinrichtung (11),
- einer zwischen dem Drucklufteingang (1) und der Trocknungseinrichtung (11) aus der Druckleitung (3) abzweigenden Entlüftungsleitung (14), in der ein pneumatisch betätigbares Entlüftungsventil (15) angeordnet ist,
- einem Regenerationspfad (22), welcher in Abhängigkeit der Schaltstellung eines Entlüftungssteuerventils (23) mit der Systemdruckleitung (5) oder mit einer an die Systemdruckleitung (5) angeschlossenen Leitung, insbesondere einem Druckluftverbraucherkreis (7, 8, 9, 10), verbindbar ist und zwischen der Trocknungseinrichtung (11) und dem Rückschlagventil (4) in die Druckleitung (3) einmündet,
- einem elektrisch betätigbaren Zufuhrsteuerventil (17) zur Steuerung der Zufuhr von Druckluft zum Drucklufteingang (1),
**dadurch gekennzeichnet, dass**
ein Aufbereitungsmodul (126) mit einer Trocknungseinrichtung (126-11) in einer parallel zur Druckleitung (3) liegenden Paralleldruckleitung (142) vorgesehen ist, welcher alternativ zur Druckleitung (3) von einem Wechselventil (145) freigebbar ist.

2. Druckluftaufbereitungseinrichtung nach Anspruch 1,
**dadurch gekennzeichnet, dass**
das Wechselventil (145) pneumatisch betätigbar ist und an die Betätigung des Entlüftungsventils (15) eines Hauptmoduls (141) der Druckluftaufbereitungseinrichtung (140) geknüpft ist.

3. Druckluftaufbereitungseinrichtung mit
- mindestens einem Drucklufteingang (1), an den ein Kompressor (2) anschließbar ist,
- einer mit dem Drucklufteingang (1) verbundenen Druckleitung (3),
- einer Systemdruckleitung (5), welche über ein Rückschlagventil (4) an die Druckleitung (3) angeschlossen ist,
- einer in der Druckleitung (3) angeordneten Trocknungseinrichtung (11),
- einer zwischen dem Drucklufteingang (1) und der Trocknungseinrichtung (11) aus der Druckleitung (3) abzweigenden Entlüftungsleitung (14), in der ein pneumatisch betätigbares Entlüftungsventil (15) angeordnet ist,
- einem Regenerationspfad (22), welcher in Abhängigkeit der Schaltstellung eines Entlüftungssteuerventils (23) mit der Systemdruckleitung (5) oder mit einer an die Systemdruckleitung (5) angeschlossenen Leitung, insbesondere einem Druckluftverbraucherkreis (7, 8, 9, 10), verbindbar ist und zwischen der Trocknungseinrichtung (11) und dem Rückschlagventil (4) in die Druckleitung (3) einmündet,
- einem elektrisch betätigbaren Zufuhrsteuerventil (17) zur Steuerung der Zufuhr von Druckluft zum Drucklufteingang (1),
**dadurch gekennzeichnet, dass**
das Entlüftungssteuerventil (23) als pneumatisch betätigbares Governor-Ventil (103) ausgebildet ist, welches im Regenerationspfad (22) angeordnet ist und ständig vom Systemdruck (P SYS) in der Systemdruckleitung (5) oder einer an die Systemdruckleitung (5) angeschlossenen Leitung, insbesondere einem nicht druckbegrenzten Druckluftverbraucherkreis (7, 8, 10) steuerbar ist.

4. Druckluftaufbereitungseinrichtung nach einem der vorhergehenden Ansprüche,
**dadurch gekennzeichnet, dass**
das Zufuhrsteuerventil (17) mit seinem Arbeitsanschluss (20) an eine Kompressorsteuerleitung (21) eines Kompressors (2) angeschlossen ist, wobei ein Versorgungsanschluss (18) des Zufuhrsteuerventils (17) mit der Systemdruckleitung (5) oder einem der Druckluftverbraucherkreise (7, 8, 9, 10) verbunden ist.

5. Druckluftaufbereitungseinrichtung nach einem der vorhergehenden Ansprüche,
**dadurch gekennzeichnet, dass**
ein Entlüftungsanschluss (19) des Zufuhrsteuerventils (17) mit dem Regenerationspfad (22) verbunden ist.

6. Druckluftversorgungssystem für ein Fahrzeug mit
a) einer Druckluftaufbereitungseinrichtung gemäß einem der Ansprüche 1 bis 5,
b) einem Kompressor (2),
c) einem an die Systemdruckleitung (5) angeschlossenen Mehrkreisschutzventil (6), an welches einzelne Druckluftverbraucherkreise (7, 8, 9, 10) angeschlossen sind,
d) einer elektronischen Steuereinheit (122) zur Erzeugung elektrischer Ventilsteuersignale,
**dadurch gekennzeichnet, dass**
die Druckluftaufbereitungseinrichtung (121), das Mehrkreisschutzventil (6) und die Steuereinheit (122) modulare Baugruppen bilden, wobei die Druckluftaufbereitungseinrichtung (121) mit Ausnahme des Zufuhrsteuerventils (127) in einem pneumatischen Aufbereitungsmodul (126, 126a) angeordnet ist.

7. Druckluftversorgungssystem nach Anspruch 6,
**dadurch gekennzeichnet, dass**
ein Steuermodul (131), welches die Steuereinheit (122) enthält, auf die Baugruppe des Mehrkreisschutzventils (6) aufsetzbar ist und Leitungsabschnitte zu mindestens einem der der Druckluftverbraucherkreise (7, 8, 9, 10) aufweist, wobei in mindestens einem der Leitungsabschnitte der Druckluftverbraucherkreise (7, 8, 9, 10) ein Drucksensor (132, 132a, 132b, 132c) angeordnet ist, welcher mit der Steuereinheit (122) verbunden ist.

8. Druckluftversorgungssystem nach Anspruch 6 oder 7,
**dadurch gekennzeichnet, dass**
die Steuereinheit (122) zur parallelen Steuerung mehrerer Systeme eines Fahrzeugs ausgebildet ist.

9. Druckluftversorgungssystem nach einem der Ansprüche 6 bis 8,
**dadurch gekennzeichnet, dass**
das Zufuhrsteuerventil (127) dem Kompressor (2) zugeordnet ist.

10. Druckluftversorgungssystem nach einem der Ansprüche 6 bis 9,
**dadurch gekennzeichnet, dass**
die Druckluftaufbereitungseinrichtung (160) zwei oder mehr parallel geschaltete Aufbereitungsmodule (126, 126a) aufweist, welche jeweils ein pneumatisch betätigbares Governor-Ventil (126-103, 126-103a) als Entlüftungssteuerventil (23) aufweisen und von einem Wechselventil (155) alternativ aktivierbar sind.

11. Druckluftaufbereitungseinrichtung mit einem Aufbereitungsmodul (126), wobei die Druckluftaufbereitungseinrichtung (100, 110, 120) nach einem der Ansprüche 1 bis 5 ausgebildet ist, wobei das Aufbereitungsmodul (126) ausschließlich pneumatische Elemente aufweist, nämlich
- einen Drucklufteingang (126-1E), an den ein Kompressor (2) anschließbar ist,
- eine mit dem Drucklufteingang (126-1E) verbundenen Druckleitung (126-3),
- eine Systemdruckleitung (126-5), welche über ein Rückschlagventil (126-4) an die Druckleitung (126-3) angeschlossen ist und zu einem Druckluftausgang (126-1A) führt,
- eine in der Druckleitung (126-3) angeordneten Trocknungseinrichtung (126-11),
- eine zwischen dem Drucklufteingang (126-1E) und der Trocknungseinrichtung (126-11) aus der Druckleitung (126-3) abzweigenden Entlüftungsleitung (126-14), in der ein pneumatisch betätigbares Entlüftungsventil (126-15) angeordnet ist,
- einen Regenerationspfad (126-22), welcher aus der Systemdruckleitung (126-5) abzweigt und zwischen der Trocknungseinrichtung (126-11) und dem Rückschlagventil (126-4) in die Druckleitung (126-3) einmündet,
- ein Entlüftungssteuerventil, welches im Regenerationspfad (126-22) angeordnet ist und als pneumatisch betätigbares Governor-Ventil (126-103) ausgebildet ist, welches ständig vom Systemdruck (P SYS) in der Systemdruckleitung (126-5) steuerbar ist.

12. Druckluftaufbereitungseinrichtung mit einem Aufbereitungsmodul (126) nach Anspruch 11,
**dadurch gekennzeichnet, dass**
ein Steuereingang (126-25) des Entlüftungsventils (126-15) mit einer Regenerationsdruckleitung (126-101) zwischen dem Governor-Ventil (126-103) und der Druckleitung (126-3) verbunden ist.

13. Druckluftversorgungssystem mit einem Aufbereitungsmodul (126), wobei das Druckluftversorgungssystem nach einem der Ansprüche 6 bis 10 ausgebildet ist, wobei das Aufbereitungsmodul (126) ausschließlich pneumatische Elemente aufweist, nämlich
- einen Drucklufteingang (126-1E), an den ein Kompressor (2) anschließbar ist,
- eine mit dem Drucklufteingang (126-1E) verbundenen Druckleitung (126-3),
- eine Systemdruckleitung (126-5), welche über ein Rückschlagventil (126-4) an die Druckleitung (126-3) angeschlossen ist und zu einem Druckluftausgang (126-1A) führt,
- eine in der Druckleitung (126-3) angeordneten Trocknungseinrichtung (126-11),
- eine zwischen dem Drucklufteingang (126-1E) und der Trocknungseinrichtung (126-11) aus der Druckleitung (126-3) abzweigenden Entlüftungsleitung (126-14), in der ein pneumatisch betätigbares Entlüftungsventil (126-15) angeordnet ist,
- einen Regenerationspfad (126-22), welcher aus der Systemdruckleitung (126-5) abzweigt und zwischen der Trocknungseinrichtung (126-11) und dem Rückschlagventil (126-4) in die Druckleitung (126-3) einmündet,
- ein Entlüftungssteuerventil, welches im Regenerationspfad (126-22) angeordnet ist und als pneumatisch betätigbares Governor-Ventil (126-103) ausgebildet ist, welches ständig vom Systemdruck (P SYS) in der Systemdruckleitung (126-5) steuerbar ist.

14. Druckluftversorgungssystem mit einem Aufbereitungsmodul (126) nach Anspruch 13,
**dadurch gekennzeichnet, dass**
ein Steuereingang (126-25) des Entlüftungsventils (126-15) mit einer Regenerationsdruckleitung (126-101) zwischen dem Governor-Ventil (126-103) und der Druckleitung (126-3) verbunden ist.

15. Druckluftaufbereitungseinrichtung mit einem Steuermodul (131) mit einer Steuereinheit (122), der ein Signalausgang (134) und/oder eine interne Signalleitung zum Anschluss eines elektrisch betätigbaren Zufuhrsteuerventils (127) der Druckluftaufbereitungseinrichtung (100, 110; 121) gemäß einem der Ansprüche 1 bis 5 zugeordnet sind, wobei über den Signalausgang (134) und/oder die Signalleitung ein Steuersignal der Steuereinheit (122) für das Zufuhrsteuerventil (127) abgebbar ist und über das Steuersignal eine Druckluftzufuhr zur Druckluftaufbereitungseinrichtung (100, 110; 121) steuerbar ist, wobei die Steuereinheit (122) des Steuermoduls (131) derart ausgebildet ist, dass unter Berücksichtigung eines Systemdrucks (P SYS) in einer Systemdruckleitung (5) der Druckluftaufbereitungseinrichtung (100, 110; 121) oder einer an die Systemdruckleitung (5) angeschlossenen Leitung ein gewünschter Betriebsmodus der Druckluftaufbereitungseinrichtung (100, 110; 121) steuerbar ist, indem in einem Förderbetrieb als gewünschtem Betriebsmodus unter Berücksichtigung des Systemdrucks (P SYS) die Druckluftzufuhr bei Erreichen eines vorgegebenen Abschaltwerts (PA) des Systemdrucks (P SYS) unterbrochen wird, welcher niedriger als ein Umschaltdruck (PU) eines pneumatisch betätigbaren Entlüftungssteuerventils (23) der Druckluftaufbereitungseinrichtung ist, und bei Anforderung eines Regenerationsbetriebs die Druckluftzufuhr aufrechterhalten wird, bis der Systemdruck (P SYS) den Umschaltdruck (PU) des Entlüftungssteuerventils (23) überschreitet.

16. Druckluftversorgungssystem mit einem Steuermodul (131) mit einer Steuereinheit (122), der ein Signalausgang (134) und/oder eine interne Signalleitung zum Anschluss eines elektrisch betätigbaren Zufuhrsteuerventils (127) des Druckluftversorgungssystems gemäß einem der Ansprüche 6 bis 10 zugeordnet sind, wobei über den Signalausgang (134) und/oder die Signalleitung ein Steuersignal der Steuereinheit (122) für das Zufuhrsteuerventil (127) abgebbar ist und über das Steuersignal eine Druckluftzufuhr zur Druckluftaufbereitungseinrichtung (100, 110; 121) steuerbar ist, wobei die Steuereinheit (122) des Steuermoduls (131) derart ausgebildet ist, dass unter Berücksichtigung eines Systemdrucks (P SYS) in einer Systemdruckleitung (5) der Druckluftaufbereitungseinrichtung (100, 110; 121) oder einer an die Systemdruckleitung (5) angeschlossenen Leitung ein gewünschter Betriebsmodus der Druckluftaufbereitungseinrichtung (100, 110; 121) steuerbar ist, indem in einem Förderbetrieb als gewünschtem Betriebsmodus unter Berücksichtigung des Systemdrucks (P SYS) die Druckluftzufuhr bei Erreichen eines vorgegebenen Abschaltwerts (PA) des Systemdrucks (P SYS) unterbrochen wird, welcher niedriger als ein Umschaltdruck (PU) eines pneumatisch betätigbaren Entlüftungssteuerventils (23) der Druckluftaufbereitungseinrichtung ist, und bei Anforderung eines Regenerationsbetriebs die Druckluftzufuhr aufrechterhalten wird, bis der Systemdruck (P SYS) den Umschaltdruck (PU) des Entlüftungssteuerventils (23) überschreitet.

17. Fahrzeug mit einer Druckluftaufbereitungseinrichtung nach einem der Ansprüche 1 bis 5, eine Druckluftaufbereitungseinrichtung mit einem Aufbereitungsmodul nach Anspruch 11 oder 12 oder einem Druckluftversorgungssystem mit einem Aufbereitungsmodul nach Anspruch 13 oder 14 und/oder einer Druckluftaufbereitungseinrichtung mit einem Steuermodul gemäß Anspruch 15 oder einem Druckluftversorgungssystem mit einem Steuermodul gemäß Anspruch 16.

## Claims

1. Compressed-air conditioning device, comprising
- at least one compressed-air inlet (1), to which a compressor (2) can be connected,
- a pressure line (3) connected to the compressed-air inlet (1),
- a system pressure line (5), which is connected via a check valve (4) to the pressure line (3),
- a drying device (11) arranged in the pressure line (3),
- a bleed line (14) which branches off from the pressure line (3) between the compressed-air inlet (1) and the drying device (11) and in which a pneumatically actuatable bleed valve (15) is arranged,
- a regeneration path (22) which can be connected, according to the switching position of a bleed control valve (23), to the system pressure line (5) or to a line connected to the system pressure line (5), in particular to a compressed-air consumer circuit (7, 8, 9, 10), and which discharges between the drying device (11) and the check valve (4) into the pressure line (3),
- an electrically actuatable feed control valve (17) for controlling the feed of compressed air to the compressed-air inlet (1),
**characterized in that**
a conditioning module (126) comprising a drying device (126-11) is provided in a parallel pressure line (142) which is arranged in parallel with respect to the pressure line (3) and which, alternatively to the pressure line (3), can be opened up by a shuttle valve (145).

2. Compressed-air conditioning device according to Claim 1,
**characterized in that**
the shuttle valve (145) is pneumatically actuatable and is linked to the actuation of the bleed valve (15) of a primary module (141) of the compressed-air conditioning device (140).

3. Compressed-air conditioning device, comprising
- at least one compressed-air inlet (1), to which a compressor (2) can be connected,
- a pressure line (3) connected to the compressed-air inlet (1),
- a system pressure line (5), which is connected via a check valve (4) to the pressure line (3),
- a drying device (11) arranged in the pressure line (3),
- a bleed line (14) which branches off from the pressure line (3) between the compressed-air inlet (1) and the drying device (11) and in which a pneumatically actuatable bleed valve (15) is arranged,
- a regeneration path (22) which can be connected, according to the switching position of a bleed control valve (23), to the system pressure line (5) or to a line connected to the system pressure line (5), in particular to a compressed-air consumer circuit (7, 8, 9, 10), and which discharges between the drying device (11) and the check valve (4) into the pressure line (3),
- an electrically actuatable feed control valve (17) for controlling the feed of compressed air to the compressed-air inlet (1),
**characterized in that**
the bleed control valve (23) is formed as a pneumatically actuatable governor valve (103), which is arranged in the regeneration path (22) and can be controlled constantly by the system pressure (P SYS) in the system pressure line (5) or in a line connected to the system pressure line (5), in particular in a compressed-air consumer circuit (7, 8, 10) which is not pressure-limited.

4. Compressed-air conditioning device according to any of the preceding claims,
**characterized in that**
the feed control valve (17) is connected via its working port (20) to a compressor control line (21) of a compressor (2), wherein a supply port (18) of the feed control valve (17) is connected to the system pressure line (5) or to one of the compressed-air consumer circuits (7, 8, 9, 10).

5. Compressed-air conditioning device according to any of the preceding claims,
**characterized in that**
a bleed port (19) of the feed control valve (17) is connected to the regeneration path (22).

6. Compressed-air supply system for a vehicle, comprising
a) a compressed-air conditioning device according to any of Claims 1 to 5,
b) a compressor (2),
c) a multi-circuit protection valve (6) which is connected to the system pressure line (5) and to which individual compressed-air consumer circuits (7, 8, 9, 10) are connected,
d) an electronic control unit (122) for generating electrical valve control signals,
**characterized in that**
the compressed-air conditioning device (121), the multi-circuit protection valve (6) and the control unit (122) form modular assemblies, wherein the compressed-air conditioning device (121) is, with the exception of the feed control valve (127), arranged in a pneumatic conditioning module (126, 126a).

7. Compressed-air supply system according to Claim 6, **characterized in that**
a control module (131), which comprises the control unit (122), can be fitted on the assembly of the multi-circuit protection valve (6) and has line portions to at least one of the compressed-air consumer circuits (7, 8, 9, 10), wherein a pressure sensor (132, 132a, 132b, 132c) is arranged in at least one of the line portions of the compressed-air consumer circuits (7, 8, 9, 10) and is connected to the control unit (122).

8. Compressed-air supply system according to Claim 6 or 7,
**characterized in that**
the control unit (122) is designed for the parallel control of a plurality of systems of a vehicle.

9. Compressed-air supply system according to any of Claims 6 to 8,
**characterized in that**
the feed control valve (127) is assigned to the compressor (2).

10. Compressed-air supply system according to any of Claims 6 to 9,
**characterized in that**
the compressed-air conditioning device (160) has two or more conditioning modules (126, 126a) which are connected in parallel and which each have a pneumatically actuatable governor valve (126-103, 126-103a) as a bleed control valve (23) and can be activated alternatively by a shuttle valve (155).

11. Compressed-air conditioning device having a conditioning module (126), wherein the compressed-air conditioning device (100, 110, 120) is designed according to any of Claims 1 to 5, wherein the conditioning module (126) has exclusively pneumatic elements, namely
- a compressed-air inlet (126-1E), to which a compressor (2) can be connected,
- a pressure line (126-3) connected to the compressed-air inlet (126-1E),
- a system pressure line (126-5), which is connected via a check valve (126-4) to the pressure line (126-3) and leads to a compressed-air outlet (126-1A),
- a drying device (126-11) arranged in the pressure line (126-3),
- a bleed line (126-14) which branches off from the pressure line (126-3) between the compressed-air inlet (126-1E) and the drying device (126-11) and in which a pneumatically actuatable bleed valve (126-15) is arranged,
- a regeneration path (126-22), which branches off from the system pressure line (126-5) and which discharges between the drying device (126-11) and the check valve (126-4) into the pressure line (126-3),
- a bleed control valve, which is arranged in the regeneration path (126-22) and is formed as a pneumatically actuatable governor valve (126-103), which can be controlled constantly by the system pressure (P SYS) in the system pressure line (126-5).

12. Compressed-air conditioning device having a conditioning module (126) according to Claim 11,
**characterized in that**
a control inlet (126-25) of the bleed valve (126-15) is connected to a regeneration pressure line (126-101) between the governor valve (126-103) and the pressure line (126-3).

13. Compressed-air supply system having a conditioning module (126), wherein the compressed-air supply system is designed according to any of Claims 6 to 10, wherein the conditioning module (126) has exclusively pneumatic elements, namely
- a compressed-air inlet (126-1E), to which a compressor (2) can be connected,
- a pressure line (126-3) connected to the compressed-air inlet (126-1E),
- a system pressure line (126-5), which is connected via a check valve (126-4) to the pressure line (126-3) and leads to a compressed-air outlet (126-1A),
- a drying device (126-11) arranged in the pressure line (126-3),
- a bleed line (126-14) which branches off from the pressure line (126-3) between the compressed-air inlet (126-1E) and the drying device (126-11) and in which a pneumatically actuatable bleed valve (126-15) is arranged,
- a regeneration path (126-22), which branches off from the system pressure line (126-5) and which discharges between the drying device (126-11) and the check valve (126-4) into the pressure line (126-3),
- a bleed control valve, which is arranged in the regeneration path (126-22) and is formed as a pneumatically actuatable governor valve (126-103), which can be controlled constantly by the system pressure (P SYS) in the system pressure line (126-5).

14. Compressed-air supply system having a conditioning module (126) according to Claim 13,
**characterized in that**
a control inlet (126-25) of the bleed valve (126-15) is connected to a regeneration pressure line (126-101) between the governor valve (126-103) and the pressure line (126-3).

15. Compressed-air conditioning device comprising a control module (131) comprising a control unit (122), to which a signal outlet (134) and/or an internal signal line is/are assigned for connection of an electrically actuatable feed control valve (127) of the compressed-air conditioning device (100, 110; 121) according to any of Claims 1 to 5, wherein a control signal of the control unit (122) for the feed control valve (127) can be emitted via the signal outlet (134) and/or the signal line, and a feed of compressed air to the compressed-air conditioning device (100, 110; 121) can be controlled via the control signal, wherein the control unit (122) of the control module (131) is formed in such a way that, taking into consideration a system pressure (P SYS) in a system pressure line (5) of the compressed-air conditioning device (100, 110; 121) or of a line connected to the system pressure line (5), a desired operating mode of the compressed-air conditioning device (100, 110; 121) can be controlled in that, in a conveying mode as desired operating mode, taking into consideration the system pressure (P SYS), the feed of compressed air is interrupted when a predetermined switch-off value (PA) of the system pressure (P SYS) is reached, said value being lower than a switching pressure (PU) of a pneumatically actuatable bleed control valve (23) of the compressed-air conditioning device, and, when there is a request for a regeneration mode, the feed of compressed air is maintained until the system pressure (P SYS) exceeds the switching pressure (PU) of the bleed control valve (23).

16. Compressed-air supply system comprising a control module (131) comprising a control unit (122), to which a signal outlet (134) and/or an internal signal line is/are assigned for connection of an electrically actuatable feed control valve (127) of the compressed-air supply system according to any of Claims 6 to 10, wherein a control signal of the control unit (122) for the feed control valve (127) can be emitted via the signal outlet (134) and/or the signal line, and a feed of compressed air to the compressed-air conditioning device (100, 110; 121) can be controlled via the control signal, wherein the control unit (122) of the control module (131) is formed in such a way that, taking into consideration a system pressure (P SYS) in a system pressure line (5) of the compressed-air conditioning device (100, 110; 121) or of a line connected to the system pressure line (5), a desired operating mode of the compressed-air conditioning device (100, 110; 121) can be controlled in that, in a conveying mode as desired operating mode, taking into consideration the system pressure (P SYS), the feed of compressed air is interrupted when a predetermined switch-off value (PA) of the system pressure (P SYS) is reached, said value being lower than a switching pressure (PU) of a pneumatically actuatable bleed control valve (23) of the compressed-air conditioning device, and, when there is a request for a regeneration mode, the feed of compressed air is maintained until the system pressure (P SYS) exceeds the switching pressure (PU) of the bleed control valve (23).

17. Vehicle comprising a compressed-air conditioning device according to any of Claims 1 to 5, a compressed-air conditioning device comprising a conditioning module according to Claim 11 or 12 or a compressed-air supply system comprising a conditioning module according to Claim 13 or 14 and/or a compressed-air conditioning device comprising a control module according to Claim 15 or a compressed-air supply system comprising a control module according to Claim 16.

## Revendications

1. Dispositif de préparation d'air comprimé comportant
- au moins une entrée d'air comprimé (1), à laquelle un compresseur (2) peut être raccordé,
- une conduite sous pression (3) reliée à l'entrée d'air comprimé (1),
- une conduite sous pression de système (5), laquelle est raccordée à la conduite sous pression (3) par le biais d'une soupape anti-retour (4),
- un dispositif de séchage (11) disposé dans la conduite sous pression (3),
- une conduite de purge d'air (14) bifurquant à partir de la conduite sous pression (3) entre l'entrée d'air comprimé (1) et le dispositif de séchage (11), conduite de purge d'air dans laquelle est disposée une soupape de purge d'air (15) pouvant être actionnée pneumatiquement,
- une voie de régénération (22), laquelle peut, en fonction de la position de commutation d'une soupape de commande de purge d'air (23), être reliée à la conduite sous pression de système (5) ou à une conduite raccordée à la conduite sous pression de système (5), en particulier à un circuit de consommateur d'air comprimé (7, 8, 9, 10), et débouche dans la conduite sous pression (3) entre le dispositif de séchage (11) et la soupape anti-retour (4),
- une soupape de commande d'amenée (17) pouvant être actionnée électriquement pour la commande de l'amenée d'air comprimé jusqu'à l'entrée d'air comprimé (1), **caractérisé en ce**
**qu'**un module de préparation (126) doté d'un dispositif de séchage (126-11) est prévu dans une conduite sous pression parallèle (142) située parallèlement à la conduite sous pression (3), laquelle conduite sous pression parallèle peut être libérée par un distributeur sélecteur (145) en alternative à la conduite sous pression (3).

2. Dispositif de préparation d'air comprimé selon la revendication 1,
**caractérisé en ce que**
le distributeur sélecteur (145) peut être actionné pneumatiquement et est lié à l'actionnement de la soupape de purge d'air (15) d'un module principal (141) du dispositif de préparation d'air comprimé (140).

3. Dispositif de préparation d'air comprimé comportant
- au moins une entrée d'air comprimé (1), à laquelle un compresseur (2) peut être raccordé,
- une conduite sous pression (3) reliée à l'entrée d'air comprimé (1),
- une conduite sous pression de système (5), laquelle est raccordée à la conduite sous pression (3) par le biais d'une soupape anti-retour (4),
- un dispositif de séchage (11) disposé dans la conduite sous pression (3),
- une conduite de purge d'air (14) bifurquant à partir de la conduite sous pression (3) entre l'entrée d'air comprimé (1) et le dispositif de séchage (11), conduite de purge d'air dans laquelle est disposée une soupape de purge d'air (15) pouvant être actionnée pneumatiquement,
- une voie de régénération (22), laquelle peut, en fonction de la position de commutation d'une soupape de commande de purge d'air (23), être reliée à la conduite sous pression de système (5) ou à une conduite raccordée à la conduite sous pression de système (5), en particulier à un circuit de consommateur d'air comprimé (7, 8, 9, 10), et débouche dans la conduite sous pression (3) entre le dispositif de séchage (11) et la soupape anti-retour (4),
- une soupape de commande d'amenée (17) pouvant être actionnée électriquement pour la commande de l'amenée d'air comprimé jusqu'à l'entrée d'air comprimé (1),
**caractérisé en ce que**
la soupape de commande de purge d'air (23) est réalisée comme soupape de réglage (103) pouvant être actionnée pneumatiquement, laquelle est disposée dans la voie de régénération (22) et peut être commandée constamment par la pression de système (P SYS) dans la conduite sous pression de système (5) ou dans une conduite raccordée à la conduite sous pression de système (5), en particulier dans un circuit de consommateur d'air comprimé (7, 8, 10) non limité en pression.

4. Dispositif de préparation d'air comprimé selon l'une des revendications précédentes,
**caractérisé en ce que**
la soupape de commande d'amenée (17) est, par son raccord de travail (20), raccordée à une conduite de commande (21) d'un compresseur (2), un raccord d'alimentation (18) de la soupape de commande d'amenée (17) étant relié à la conduite sous pression de système (5) ou à l'un des circuits de consommateurs d'air comprimé (7, 8, 9, 10).

5. Dispositif de préparation d'air comprimé selon l'une des revendications précédentes,
**caractérisé en ce**
**qu'**un raccord de purge d'air (19) de la soupape de commande d'amenée (17) est relié à la voie de régénération (22).

6. Système d'alimentation en air comprimé pour un véhicule, comportant
a) un dispositif de préparation d'air comprimé selon l'une des revendications 1 à 5,
b) un compresseur (2),
c) une soupape de protection à plusieurs circuits (6) raccordée à la conduite sous pression de système (5), soupape de protection à laquelle des circuits de consommateurs d'air comprimé individuels (7, 8, 9, 10) sont raccordés,
d) une unité de commande électronique (122) servant à la génération de signaux de commande de soupape électriques,
**caractérisé en ce que**
le dispositif de préparation d'air comprimé (121), la soupape de protection à plusieurs circuits (6) et l'unité de commande (122) forment des ensembles modulaires, le dispositif de préparation d'air comprimé (121) étant disposé dans un module de préparation pneumatique (126, 126a), à l'exception de la soupape de commande d'amenée (127) .

7. Système d'alimentation en air comprimé selon la revendication 6,
**caractérisé en ce**
**qu'**un module de commande (131), qui comporte l'unité de commande (122), peut être placé sur l'ensemble de la soupape de protection à plusieurs circuits (6) et comprend des parties de conduite vers au moins l'un des circuits de consommateurs d'air comprimé (7, 8, 9, 10), un capteur de pression (132, 132a, 132b, 132c) étant disposé dans au moins l'une des parties de conduite des circuits de consommateurs d'air comprimé (7, 8, 9, 10), lequel capteur de pression est relié à l'unité de commande (122).

8. Système d'alimentation en air comprimé selon la revendication 6 ou 7,
**caractérisé en ce que**
l'unité de commande (122) est réalisée pour la commande en parallèle de plusieurs systèmes d'un véhicule.

9. Système d'alimentation en air comprimé selon l'une des revendications 6 à 8,
**caractérisé en ce que**
la soupape de commande d'amenée (127) est associée au compresseur (2).

10. Système d'alimentation en air comprimé selon l'une des revendications 6 à 9,
**caractérisé en ce que**
le dispositif de préparation d'air comprimé (160) comprend deux ou plus de deux modules de préparation (126, 126a) montés en parallèle, lesquels comprennent respectivement une soupape de réglage (126-103, 126-103a) pouvant être actionnée pneumatiquement en tant que soupape de commande de purge d'air (23) et peuvent être activés en alternance par un distributeur sélecteur (155).

11. Dispositif de préparation d'air comprimé comportant un module de préparation (126), dans lequel le module de préparation d'air comprimé (100, 110, 120) est réalisé selon l'une des revendications 1 à 5, dans lequel le module de préparation (126) comprend des éléments exclusivement pneumatiques, à savoir
- une entrée d'air comprimé (126-1E), à laquelle un compresseur (2) peut être raccordé,
- une conduite sous pression (126-3) reliée à l'entrée d'air comprimé (126-1E),
- une conduite sous pression de système (126-5), laquelle est raccordée à la conduite sous pression (126-3) par le biais d'une soupape anti-retour (126-4) et mène jusqu'à une sortie d'air comprimé (126-1A),
- un dispositif de séchage (126-11) disposé dans la conduite sous pression (126-3),
- une conduite de purge d'air (126-14) bifurquant à partir de la conduite sous pression (126-3) entre l'entrée d'air comprimé (126-1E) et le dispositif de séchage (126-11), conduite de purge d'air dans laquelle est disposée une soupape de purge d'air (126-15) pouvant être actionnée pneumatiquement,
- une voie de régénération (126-22), laquelle bifurque à partir de la conduite sous pression de système (126-5) et débouche dans la conduite sous pression (126-3) entre le dispositif de séchage (126-11) et la soupape anti-retour (126-4),
- une soupape de commande de purge d'air, laquelle est disposée dans la voie de régénération (126-22) et est réalisée en tant que soupape de réglage (126-103) pouvant être actionnée pneumatiquement, laquelle peut être commandée constamment par la pression de système (P SYS) dans la conduite sous pression de système (126-5).

12. Dispositif de préparation d'air comprimé comportant un module de préparation (126) selon la revendication 11,
**caractérisé en ce**
**qu'**une entrée de commande (126-25) de la soupape de purge d'air (126-15) est reliée à une conduite sous pression de régénération (126-101) entre la soupape de réglage (126- 103) et la conduite sous pression (126-3).

13. Système d'alimentation en air comprimé comportant un module de préparation (126), le système d'alimentation en air comprimé étant réalisé selon l'une des revendications 6 à 10, le module de préparation (126) comprenant des éléments exclusivement pneumatiques, à savoir
- une entrée d'air comprimé (126-1E), à laquelle un compresseur (2) peut être raccordé,
- une conduite sous pression (126-3) reliée à l'entrée d'air comprimé (126-1E),
- une conduite sous pression de système (126-5), laquelle est raccordée à la conduite sous pression (126-3) par le biais d'une soupape anti-retour (126-4) et mène jusqu'à une sortie d'air comprimé (126-1A),
- un dispositif de séchage (126-11) disposé dans la conduite sous pression (126-3),
- une conduite de purge d'air (126-14) bifurquant à partir de la conduite sous pression (126-3) entre l'entrée d'air comprimé (126-1E) et le dispositif de séchage (126-11), conduite de purge d'air dans laquelle est disposée une soupape de purge d'air (126-15) pouvant être actionnée pneumatiquement,
- une voie de régénération (126-22), laquelle bifurque à partir de la conduite sous pression de système (126-5) et débouche dans la conduite sous pression (126-3) entre le dispositif de séchage (126-11) et la soupape anti-retour (126-4),
- une soupape de commande de purge d'air, laquelle est disposée dans la voie de régénération (126-22) et est réalisée en tant que soupape de réglage (126-103) pouvant être actionnée pneumatiquement, laquelle peut être commandée constamment par la pression de système (P SYS) dans la conduite sous pression de système (126-5).

14. Système d'alimentation en air comprimé comportant un module de préparation (126) selon la revendication 13,
**caractérisé en ce**
**qu'**une entrée de commande (126-25) de la soupape de purge d'air (126-15) est reliée à une conduite sous pression de régénération (126-101) entre la soupape de réglage (126-103) et la conduite sous pression (126-3).

15. Dispositif de préparation d'air comprimé comportant un module de commande (131) doté d'une unité de commande (122) à laquelle est associée une sortie de signal (134) et/ou une ligne de signal interne pour le raccordement d'une soupape de commande d'amenée (127) pouvant être actionnée électriquement du dispositif de préparation d'air comprimé (100, 110 ; 121) selon l'une des revendications 1 à 5, dans lequel un signal de commande de l'unité de commande (122) pour la soupape de commande d'amenée (127) peut être délivré par le biais de la sortie de signal (134) et/ou de la ligne de signal et une amenée d'air comprimé au dispositif de préparation d'air comprimé (100, 110 ; 121) peut être commandée par le biais du signal de commande, dans lequel l'unité de commande (122) du module de commande (131) est réalisée de telle sorte qu'en tenant compte d'une pression de système (P SYS) dans une conduite sous pression de système (5) du dispositif de préparation d'air comprimé (100, 110 ; 121) ou dans une conduite raccordée à la conduite sous pression de système (5), un mode de fonctionnement souhaité du dispositif de préparation d'air comprimé (100, 110 ; 121) peut être commandé, par le fait que, dans un fonctionnement de refoulement en tant que mode de fonctionnement souhaité, en tenant compte de la pression de système (P SYS), l'amenée d'air comprimé est interrompue lorsqu'une valeur de coupure prédéfinie (PA) de la pression de système (P SYS) est atteinte, laquelle valeur est inférieure à une pression de commutation (PU) d'une soupape de commande de purge d'air (23) pouvant être actionnée pneumatiquement du dispositif de préparation d'air comprimé, et en cas de demande de mode de régénération, l'amenée d'air comprimé est maintenue jusqu'à ce que la pression de système (P SYS) dépasse la pression de commutation (PU) de la soupape de commande de purge d'air (23).

16. Système d'alimentation en air comprimé comportant un module de commande (131) doté d'une unité de commande (122) à laquelle est associée une sortie de signal (134) et/ou une conduite de signal interne pour le raccordement d'une soupape de commande d'amenée (127) pouvant être actionnée électriquement du système d'alimentation en air comprimé selon l'une des revendications 6 à 10, dans lequel un signal de commande de l'unité de commande (122) pour la soupape de commande d'amenée (127) peut être délivré par le biais de la sortie de signal (134) et/ou de la ligne de signal et une amenée d'air comprimé au dispositif de préparation d'air comprimé (100, 110 ; 121) peut être commandée par le biais du signal de commande, dans lequel l'unité de commande (122) du module de commande (131) est réalisée de telle sorte qu'en tenant compte d'une pression de système (P SYS) dans une conduite sous pression de système (5) du dispositif de préparation d'air comprimé (100, 110 ; 121) ou dans une conduite raccordée à la conduite sous pression de système (5), un mode de fonctionnement souhaité du dispositif de préparation d'air comprimé (100, 110 ; 121) peut être commandé, par le fait que, dans un fonctionnement de refoulement en tant que mode de fonctionnement souhaité, en tenant compte de la pression de système (P SYS), l'amenée d'air comprimé est interrompue lorsqu'une valeur de coupure prédéfinie (PA) de la pression de système (P SYS) est atteinte, laquelle valeur est inférieure à une pression de commutation (PU) d'une soupape de commande de purge d'air (23) pouvant être actionnée pneumatiquement du dispositif de préparation d'air comprimé, et en cas de demande de mode de régénération, l'amenée d'air comprimé est maintenue jusqu'à ce que la pression de système (P SYS) dépasse la pression de commutation (PU) de la soupape de commande de purge d'air (23) .

17. Véhicule comportant un dispositif de préparation d'air comprimé selon l'une des revendications 1 à 5, un dispositif de préparation d'air comprimé comportant un module de préparation selon la revendication 11 ou 12 ou un système d'alimentation en air comprimé comportant un module de préparation selon la revendication 13 ou 14 et/ou un dispositif de préparation d'air comprimé comportant un module de commande selon la revendication 15 ou un système d'alimentation en air comprimé comportant un module de commande selon la revendication 16.
